(19) Europäisches Patentamt
European Patent Office
Office européen des brevets

(11) EP 1 568 728 A2

(12) # EUROPEAN PATENT APPLICATION

(43) Date of publication:
**31.08.2005 Bulletin 2005/35**

(51) Int Cl.[7]: **C08G 65/46**, C08J 3/12, B29B 9/04, C08L 71/00

(21) Application number: **05003546.8**

(22) Date of filing: **18.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **19.02.2004 JP 2004043438**
**20.02.2004 JP 2004045068**
**19.02.2004 JP 2004043403**
**24.02.2004 JP 2004047256**
**23.02.2004 JP 2004046380**

(71) Applicants:
- **DAI-ICHI KOGYO SEIYAKU CO., LTD.**
  **Kyoto 600-8873 (JP)**
- **NIPPON SHOKUBAI CO., LTD.**
  **Osaka 541-0043 (JP)**

(72) Inventors:
- **Tezuka, Masaki**
  **Kusatu-shi Shiga 525-0059 (JP)**
- **Tanaka, Hiroshi**
  **Kobe-shi Hyogo 657-0056 (JP)**
- **Yokohashi, Takao**
  **Higashiomi-shi Shiga 529-1403 (JP)**
- **Nishihata, Takao**
  **Otsu-shi Shiga 520-0854 (JP)**
- **Kikuta, Manabu**
  **Kyotanabe-shi Kyoto 610-0311 (JP)**
- **Kono, Michiyuki**
  **Neyagawa-shi Osaka 572-0082 (JP)**
- **Higashizaki, Tetsuya**
  **Sakurai-shi Nara 633-0011 (JP)**
- **Takei, Kazuo**
  **Suita-shi Osaka 564-0025 (JP)**
- **Toba, Taketo**
  **Takarazuka-shi Hyogo 665-0815 (JP)**
- **Kuriyama, Toshiaki**
  **Kawasaki-Shi Kanagawa 210-0831 (JP)**
- **Okada, Izuho**
  **Himeji-Shi Hyogo 671-1146 (JP)**
- **Tamura, Fumihide**
  **Kusatsu-shi Shiga 525-0023 (JP)**
- **Kitada, Ritsuo**
  **Takatsuki-Shi Osaka 569-0002 (JP)**
- **Takamiya, Shigetaka**
  **Singapore 148955 (JP)**
- **Iwamura, Jun**
  **Hamada Himeji-shi Hyogo 671-1242 (JP)**
- **Murakami, Takanori**
  **Zhangjiagang City Jiangsu Prov. 215600 (CN)**
- **Katsuyama, Hiromoto**
  **Mishima-Gun Osaka 618-0002 (JP)**
- **Matsushita, Teruki**
  **Suita-Shi Osaka 564-0024 (JP)**

(74) Representative: **Strehl Schübel-Hopf & Partner**
**Maximilianstrasse 54**
**80538 München (DE)**

(54) **Water soluble non-ionic alkylene oxide resin and production process therefor**

(57) The present invention concerns a method of removing a solvent from a solution of a water soluble nonionic alkylene oxide resin and the resin removed with the solvent by using the method. The invention also concerns a process for producing a water soluble nonionic alkylene oxide resin after removal of a solvent and a resin obtained thereby, a method of manufacturing pellets of the resin and pellets obtained thereby, as well as a method of manufacturing pulverized resin products, and pulverized resin products obtained by the method.

FIG. 1

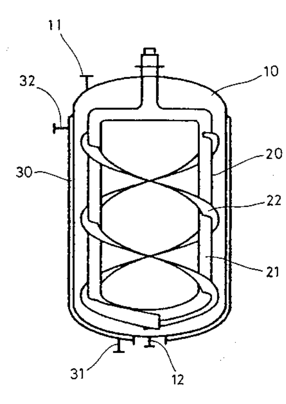


EP 1 568 728 A2

## Description

BACKGROUND OF THE INVENTION

The present invention concerns a method of removing a solvent from a solution of a water soluble nonionic alkylene oxide resin and the resin removed with the solvent by using the method. The invention also concerns a process for producing a water soluble nonionic alkylene oxide resin after removal of a solvent and a resin obtained thereby, a method of manufacturing pellets of the resin and pellets obtained thereby, as well as a method of manufacturing pulverized resin products, and pulverized resin products obtained by the method.

Heretofore, resins generally referred to as water soluble nonionic alkylene oxide resins (for example, refer to, "Encyclopedia of Polymer Science and Engineering" edited by Herman F. Mark, NorbertM. Bikales, Charles G. Overberger, Georg Menges, vol. 6, published from Wiley Interscience (US), 1986, p225-322) including ethylene oxide - butylene oxide copolymers are useful as polymeric materials in application uses as polyurethane resins for adhesives, paints, sealants, elastomers, floor materials and so on, and as rigid, soft or semi-rigid polyurethane resins and, further, as surfactants, sanitary products, deinking agents, lubricants and hydrofluoric liquids. In recent years, utilization of them for further various new application uses has also been considered in view of the general applicability thereof.

Among all, ethylene oxide - butylene oxide copolymers (hereinafter sometimes referred to as EO-BO copolymers) resins have a possibility of developing excellent electrochemical characteristics and their usefulness has been noted as materials for electrochemical devices such as electric cells.

However, in the resins described above, since the organic solvents or water content contained in the resins have a close concern with the physical properties or electric characteristics of the resins, reduction of them is an important subject.

As a method of producing a resin with less volatile ingredients by removing an organic solvent from a resin solution comprising a water soluble nonionic alkylene oxide resin and an organic solvent, a method of bringing the nonionic alkylene oxide water soluble resin into contact with a solvent not dissolving the resin thereby re-precipitating the same.

However, the method of re-precipitation by contact with the solvent requires a great amount of extraction solvent and involves a problem of requiring a separation step for the resin and the solvent and a subsequent solvent removing step, thereby complicating the production steps.

On the other hand, as a method of removing a solvent from a resin solution comprising a thermoplastic polymer such as a styrene acryl copolymer and an organic solvent, JP-A No. 8-41123 proposes a method of using a single shaft thin film evaporator and reducing the residual solvent to 1000 ppm or less without causing thermal or mechanical degradation of the resin.

Further, application of the method of using the thin film evaporator to the water soluble nonionic alkylene oxide resin results in a problem that it is difficult to keep a thin film or take out solvent-removed products in usual thin film evaporators because of high viscosity of the solvent-removed resin. Further, it results in a problem such as coloration of the resin or decomposition of antioxidant upon recovery.

From the foregoings, the present invention intends to provide a method of removing a solvent with good operability capable of effectively removing volatile ingredients and reducing the residual amount of the solvent while preventing degradation, etc. of a water soluble nonionic alkylene oxide resin.

The invention further intends to provide a method of cooling to solidify a water soluble nonionic alkylene oxide resin in a flowable state obtained by polymerization using a solvent and removed with the solvent by the removal of a solvent under heating and, further, manufacturing pellets of the resin.

As a method of cooling to solidify (hardening) the resin after the removal of a solvent, it has been known in a case, for example, of a water insoluble crystalline resin such as polypropylene, polyethylene and PET, of extruding a resin after removal of the solvent into a thread-like or sheet-like shape, for example, by an extruder or press roller as required and then cooling to solidify (hardening) the same by water cooling (for example, refer to JP-A No. 2002-331522).

However, in a case where the resin to be produced is a water soluble nonionic alkylene oxide resin, since it has a relatively low melting point and a dissolution rate to water and a water absorption rate are extremely high, different from the water insoluble resin described above, it has been a problem that the method is not applicable in a case of conducting cooling and solidification by water cooling as described above causing various disadvantages such as formation of tacks on the resin surface, adhesion of thread-like or sheet-like resins to each other or disconnection by elongation of the thread-like resin. Accordingly, in a case where a resin pelleted to an appropriate size is necessary as the starting material, for example, in a case of supplying the resin to an extruder and conducting extrusionmolding, since awater soluble nonionic alkylene oxide resin can not be solidified by water cooling and it can not be pelleted appropriately after solidification, it can not but be dried and powderized directly by a method, for example, of powderizing by re-precipitation of polymer solution followed by drying, and a method of supplying such resin powder to the extruder

has been adopted. However, in a case where the starting resin is powder, surging or the like occurs inevitably upon supply to the extruder making it difficult to feed the resin at a constant amount, failing to obtain aimed molding product.

Referring to the water soluble nonionic alkylene oxide resin, in a case of use to such applications as protective films for color filters, polymeric electrolyte layers in polymer cells, adhesive tapes for use in semiconductors, urethane foams and flexographic printing plate materials, it is considered that restriction of the water content in the resin to a predetermined amount or less is important for providing the function in such application uses. However, in the course of production of the water soluble nonionic alkylene oxide resins after removal of the solvent, since control and administration for the water content in the finally obtained resin has not been conducted, it inevitably contains water content due to air or water-using atmosphere and it is not removed, the resin contains extremely high water content in view of the application uses described above. In a case of using the water soluble nonionic alkylene oxide resin with such high water content to the application uses described above, this resulted in various problems such that the dielectric coefficient increases in the protective film for color filters to deteriorate the function of the protective film, the water content and ions are reacted in the polymeric electrolyte layer for the polymer cells to lower the potential, erroneous operation is induced by the water content in the adhesive tapes for use in semiconductors, or the water content reacts with isocyanate groups in the urethane foams and the reaction does not proceed sufficiently to lower the physical property or generate foams.

In view of the above, the invention intends to provide a method capable of cooling to solidify a water soluble nonionic alkylene oxide resin in a flowable state removed with a solvent without causing various disadvantageous such as formation of tack on the surface of the resin, adhesion of thread-like or sheet-like resins to each other and breakage by elongation of the thread-like resin.

Further, in a case of manufacturing various resin products such as hot melt adhesives, NBR rubbers, fluorine rubbers and waxes by using various kinds of resin materials such as water soluble nonionic alkylene oxide resins, as well as polypropylene, polyethylene, polycarbonate, ABS, PVA (polyvinyl chloride), EVA (ethylene-vinyl acetate copolymer) and unsaturated polyesters, the resin materials are often handled as resin pellets molded into pelleted shapes with aims, for example, of stabilizing the feeding amount, improvement for the handlability during transportation or storability, or inhibition of flashing explosiveness or suppression of oxidative degradation in a case they are powderized and, further, enhancement to improve various physical properties of the resin per se or arrangement into a packaging style easy to handle with (improvement of handlability).

Various methods have been known so far for obtaining resin pellets for various kinds of resin materials and they include, for example, a hot cutting method in which a resin is in a molten state upon cutting (water immersed cutting method, or aerial cutting method, etc.) and a cold cutting method in which a resin is in a cooled and solidified state upon cutting (sheet-cutting method or strand cutting method). Among them, a sheet cutting method of forming a resin into a sheet-like shape previously in the stage of synthesis and finely cutting, pulverizing, etc. of the resin sheet is often adopted since it is simple and convenient and efficient, and also excellent in view of the productivity and economical efficiency.

The sheet cuttingmethod includes various types of usually known methods, as well as a method of cutting a resin sheet while heating a cutter to a temperature lower than the melting point of the resin (for example, refer to JP-A No. 52-41683), a method of pelletizing a thermoplastic resin composition by a sheet cutting system (for example refer to JP-A No. 4-97805) and resin pellets are actually produced by resin material manufactures, etc. by using the methods described above.

As a method of pelletizing a hydrophilic resin, JP-A No . 2002-331522, for example, describes a method of melting and extruding a resin, cooling to solidify the extruded resin by contact with a metal plate and cutting the solidified resin. Further, the above-mentioned publication discloses a method of blowing a coolant from the rear face of a metal surface in contact with a resin thereby cooling to harden the resin, and it describes that a temperature lower by 20°C or more than the melting point of the resin is preferred (page 3, paragraph [0015]) .

However, in a case of the water soluble nonionic alkylene oxide resin having a crystallization temperature as low as from 10 to 60°C, when the resin is merely brought into contact with the metal plate, it results in a problem that the cooling efficiency is worsened extremely and resin pellets can not be produced stably. On the other hand, even in a case where it is cooled to a temperature lower by 20°C or more than the melting point of the resin, cutting is not always easy and stable cutting requires cooling to an extremely low temperature, which also results in a problem of poor efficiency.

Further, a resin of low crystallization temperature also involves a problem that it is less solidified, as well as the resin adheres to a cutter or blade under the effect of heat of shearing during pelletizing to remarkably hinder cutting.

In view of the foregoings, the invention intends to provide amethodof manufacturing resinpellets capable of manufacturing resin pellets stably and efficiently even for a water soluble nonionic alkylene oxide resin of low crystallization temperature, and provide resin pellets obtained by the method.

Further, the resin pellets obtained by the existent method involve problems, for example, that upon feeding a predetermined amount in the manufacturing step for various kinds of resin products, a deviation exceeding an error

range occurs between the actual feeding amount and the predetermined amount and, further, the feeding amount greatly fluctuates on every feeding. Particularly, along with technical progress in resent years, since it has been demanded more strongly in the resin products manufacturing industry that resin products of a predetermined desired quality can be produced at an extremely high accuracy, it is an important problem how to stabilize the feeding amount of the resin material described above.

In view of the above, the invention intends to provide resin pellets, with an extremely small fluctuation between the actual feeding amount and the predetermined amount as well as an extremely small fluctuation of the feeding amount on every feeding, in a case of feeding a resin material at a predetermined amount in the manufacturing step for various kinds of resin products, as well as a method of manufacturing such resin pellets easily and at good productivity.

The invention further intends to provide pulverized products of a water soluble nonionic alkylene oxide resin and a manufacturing method thereof.

That is, for pulverizing a resin to form pulverized products, usually, a rotor and a stator having plural grooves are used and the rotor is rotated at high speed to conduct pulverization. Accordingly, a great amount of heat of shearing is generated and the heat gives an undesired effect on the resin. The problem is serious in the water soluble nonionic alkylene oxide resin with the crystallization temperature as low as from 10 to 60°C.

For removing the generated heat, there have been proposed, for example, a method of freezing a resin to be pulverized to -50 to -100°C by liquid nitrogen or dry ice (freeze pulverization method), a method of cooling by introducing a cold blow at -10°C to -40°C during pulverization (refer to JP-A No. 2002-320870), and a method of cooling by mixing dry ice with a resin to be pulverized (refer to JP-A No. 7-313896).

However, the freeze pulverization method or the method described in JP-A No. 7-313896 described above intends to solve the problem caused by the heat generated by shearing only by means of cooling and involves a problem of requiring much cost since it requires cooling at a cryogenic temperature of from minus several tens to -100°C or coolant such as dry ice. Further, in the method described in JP-A No. 2002-320870, while the cooling temperature can not be said to be an extremely low temperature, this discloses a temperature suitable to the pulverization method of using an apparatus having a specific structure for manufacturing fine powder such as toners for use in copying machines and it has no general applicability.

In view of the foregoings, the invention intends to provide a manufacturing method capable of obtaining pulverized products of a water soluble nonionic alkylene oxide resin having a low crystallization temperature at a reduced cost without requiring cooling at a cryogenic temperature as in the existent case, as well as a water soluble nonionic alkylene oxide resin pulverized products obtained by the method.

SUMMARY OF THE INVENTION

The solvent removing method according to the present invention, for solving the foregoing subject, is a method of removing a solvent from a solution of a water soluble nonionic alkylene oxide resin, which comprises removing a solvent by using an apparatus having an evaporation vessel to which a resin solution is charged and a stirring blade having a helical ribbon-shaped portion disposed in the evaporation vessel, in which the stirring blade is disposed so as to scrape-up a resin solution and coating the same to the inner wall surface of the evaporation vessel upon rotation. One of log bone blade, a helical ribbon blade or double helical ribbon blade can be used as a stirring blade having the helical ribbon-shaped portion.

In the method described above, desolvation is preferably conducted after nitrogen substitution or depressurization in the inside of the evaporation vessel. The solvent is removed preferably while heating the inside of the evaporation vessel by way of a heating medium. The temperature of the heating medium is preferably controlled such that the difference between the temperature of the heating medium and the temperature inside the vessel is kept substantially constant.

Since the method of removing the solvent according to the invention is a method of directly removing the solvent from the resin solution, it has an advantage of not requiring complicate steps as in the re-precipitation method and not requiring an extraction solvent. Particularly, by the use of the helical ribbon-shaped stirring blade, even when the amount of the solvent in the system decreases to increase the viscosity, the evaporation speed is not lowered since a wider evaporation (heat conduction) area can be taken to enable desolvation in a short period of time.

Thermal degradation of the polymer and decomposition of the anti-oxidant can be prevented by removing oxygen in the evaporation vessel by nitrogen substitution or depressurization. Particularly, when the pressure is reduced, since the temperature inside the vessel (polymer) canbe lowered, higher thermal degradation preventive effect can be expected. Further, the evaporation efficiency can be improved by properly heating the evaporation vessel, and more remarkable effect can be expected, particularly, by keeping the difference constant between the temperature for the heat medium and the temperature inside the vessel.

The water soluble nonionic alkylene oxide resin obtained by the solvent removing method described above

has excellent physical properties and electrochemical characteristics and can be useful as the material for electrochemical devices.

Then, the method of manufacturing the water soluble nonionic alkylene oxide resin of the invention includes a step of bringing the water soluble nonionic alkylene oxide resin in the flowable state that is obtained by polymerization and removed with the solvent by desolvation under an elevated temperature into contact with a metal plate thereby cooling to solidify the resin in a circumstance for cooling to solidify the same without various disadvantages such as causing of tack on the resin surface, adhesion of thread-like or sheet-like resin to each other, or breakage under elongation of the thread-like resin.

Particularly, a method of manufacturing pellets of a ethylene oxide - butylene oxide copolymer resin having a crystallization temperature within a range from 10 to 60°C, comprises, extruding a water soluble nonionic alkylene oxide resin in a molten state to a predetermined thickness, cooling to solidify the extrudedmolten resin by bringing it into contact with a metal surface at a temperature lower than the crystallization temperature (Tc) of the resin and cutting the solidified resin into pellets.

In the method of manufacturing pellets of a water soluble nonionic alkylene oxide resin described above, the extruding temperature of the resin in the molten state is preferably controlled to (Tc+80)°C or lower. When cutting the solidified resin, air at a temperature of (Tc - 5)°C or lower and at a relative humidity of 70% or less is blown to a portion to be cut upon cutting the solidified resin thereby cooling the portion to be cut. Further, cutting for the solidified resin is preferably conducted under a circumference at an air temperature of (Tc + 5)°C or lower and at a relative humidity of 90% or less.

Further, cutting of the solidified resin is preferably conducted by using a blade applied with a fluoro resin-containing plating.

According to the manufacturing method of the resinpellets of the invention, the cooling effect is improved by controlling the temperature of the cooling metal plate to a crystallization temperature or lower and stable manufacture of pellets is possible even for those resins with a crystallization temperature as low as 10 to 60°C. Particularly, since the crystallization temperature is adopted instead of the melting point as the standard for the temperature, cutting can be conducted reliably with no failure and wasteful excess cooling can also be prevented.

Further, the cooling efficiency is improved by controlling the extrusion temperature of the molten resin to [Tc + 80] °C or lower. Further, heat of shearing can be removed by the control of air temperature and humidity of the circumstance where the resin is cut and by the cooling for the cut portion of the resin, which can prevent melting of the resin, fusion of the resin to each other and deposition of the resin to blades, and more stable manufacture is possible.

Further, deposition of the resin to each of blades for conducting the cutting of the resin can be prevented more reliably by applying the fluoro resin-containing plating treatment to each of the blades.

With respect to the problem of deviation between the feeding amount and the predetermined amount and the problem of deflection of the feeding amount on every feeding, it has been noted on (1) one side with the greatest variation of the length among three sides for length, width and height in rectangular resin pellets (square pellets), or noted on (2) the weight of resin pellets in various kinds of shapes including a rectangular shape or the like. It has been found that the subject described above can be solved, specifically, regarding (1) above, (a) with resin pellets where those within the range of a specified length around the number average length of one side with respect to the variation of the length of the one side described above per se occupy a predetermined ratio or more based on the entire number of pellets, or (b) resin pellets where the length of the one side per se is at a specified length or less, or regarding (2) above, (a) resin pellets where those within a range of the weight described above around the number average weight with respect to the variation of the weight described above occupy a predetermined ratio or more based on the entire number of pellets, or (b) resin pellets having weight of the predetermined weight or less.

That is, first resin pellets are in a rectangular shape wherein those having two sides within a range of (L - 0.60) mm or more and (L + 0.60) mm or less occupy 98.0% or more assuming the number average length in each of the number distributions for the lengths of three sides of length, width and height as L (mm) and those having remaining one sides within the range described above occupy less than 98.0%, and wherein

1a) those having remaining one sides within a range of (L - 0.60) mm or more and (L + 0.60) mm or less occupy 70.0% or more, or
1b $L \leq 3.0$ mm for the remaining one side.

In second resin pellets of the invention,

2a) those within a range of (W -4.2c) mg or more and (W + 4.2c) mg or less occupy 70.0% or more assuming the number average weight in the number distribution as (W) mg and the specific gravity thereof as c, or
2b) $W \leq 16.5c$ mg

Further, it has been noted on the method of obtaining resin pellets by using an apparatus of longitudinally cutting a resin material molded into a sheet-like shape having a predetermined thickness to obtain resin strands and then cutting the resin strands in the lateral direction (so-called sheet pelletizer), and it has been taken notice of a constituent portion, that is, the gap clearance at the lower end of the guide portion for guiding the resin strand for lateral cutting, in the respective constituent portions of the apparatus, which was not noticed at all as the point of improvement so far. Then, it has been found that the novel resin pellets described above can be obtained easily and at a good productivity so long as this is the manufacturing method for the resin pellets using the apparatus described above where the gap clearance is set to a predetermined size or more and a predetermined size or less.

That is, a method of manufacturing resin pellets of the invention is a method of lateral cutting resin strands obtained by longitudinally cutting a resin sheet, thereby obtaining resin pellets, which includes, conducting longitudinal cutting by using a roll cutter where two longitudinal cutting rotary blades each having a plurality of disk blades along the direction of the rotary shaft such that they are spaced with an equal distance from each other with the blade tip for each of thembeing directed vertical to the axial direction of the rotary shaft are arranged such that respective rotary shafts extend horizontally and in parallel so as to engage the respective disk blades to each other, and where the rotational directions are different from each other, and shearing the resin sheet by supplying the sheet to the engaging portion of the two longitudinal cutting rotary blades, stripping off the resin strand after shearing by a scraper with a stripping portion being faced to the gap portion between each of the disk blades for the two longitudinal cutting rotary blades, guiding the stripped resin strand downward through the gap of the guide having two surfaces opposed to each other by way of a gap, and conducting lateral cutting by using lateral cutting rotary blades disposed below the guide and having a plurality of plate blades along the rotational direction of the rotary shaft spaced with an equal distance from each other with the respective blade tip thereof being faced on one identical circumference having the axial center of the rotary shaft as the center, and a fixed blade disposed to the lower end of one of the surfaces of the guide and shearing the resin strand guided by the guide between the blade tip of the rotary blade and the blade tip of the fixed blade, wherein the gap at the lower end of the guide is set to 5.0 to 15.0 mm.

The invention can provide resin pellets with extremely less deviation between the actual feeding amount and the predetermined amount and with extremely small deflection in the feeding amount on every feeding in a case of feeding the resin material by a predetermined amount in the manufacturing steps for the various kinds of resin products, as well as a method of manufacturing such resin pellets easily and at good productivity.

Further, a method of manufacturing pulverized products of a water soluble nonionic alkylene oxide resin having a crystallization temperature within a range from 10 to 60°C uses, for solving the subject described above, a pulverizer having a rotor, at least one rotary blade attached to the circumferential surface of the rotor, at least one fixed blade attached so as to pulverize a resin by shearing with the rotary blade, and a screen attached to the outer circumference of the rotor and receiving the pulverized products as the pulverizer, in which the resin is pulverized by the shearing force exerting between the rotary blade and the fixed blade by the rotation of the rotor, pulverized products smaller than the aimed grain size pass through the screen, while particles larger than the aimed grain size are raised by the rotary blade and then again pulverized by the rotary blade and the fixed blade.

In the manufacturing method described above, the number of rotation of the rotor is preferably from 100 to 1000 rpm. Further, it is preferred that the resin supplied to the pulverizer is previously cooled to [Tc + 10]°C or lower such that the temperature of the resin after pulverization is at a crystallization temperature [Tc] or lower and a cold blow at a predetermined temperature and of a blow rate is supplied together with the resin into the pulverizer. In this case the temperature of the cold blow is within a range from [Tc - 5]°C to [Tc - 50]°C. Further, the pulverization is preferably conducted under a circumstance at an air temperature of [Tc + 20]°C or lower and at a relative humidity of 90% or less.

According to the pulverization method of the invention, it is possible for pulverization at a low power and low rotational speed, thereby decreasing the amount of generated heat. Accordingly, since it does not require a medium at an extremely low temperature, pulverized resin products can be obtained at low cost. Further, resins coarser than the aimed grain size are returned to the pulverizer again to conduct pulverization thereby capable of reducing the loss of products.

BRIEF DESCRIPTION OF THE DRAWINGS

Fig. 1 is a schematic view showing an inner structure of an evaporation device provided with a log bone blade that can be used in the present invention.

Fig. 2 is a side elevational view showing the outline of an inner structure of a square cutting pelletizer that can be used in the invention.

Fig. 3 is a front elevational view showing a longitudinal cutting blade and a lateral cutting blade of the square cutting

pelletizer in Fig. 2.
Fig. 4 is a schematic cross sectional view of a pelletizing device that can be used in the invention.
Fig. 5 is a schematic view only for a roll cutter portion of the palletizing device in Fig. 4 as viewed from above.
Fig. 6 is a schematic view taken along the direction of an arrow for the pelletizing device in Fig. 4 as viewed from a portion A.

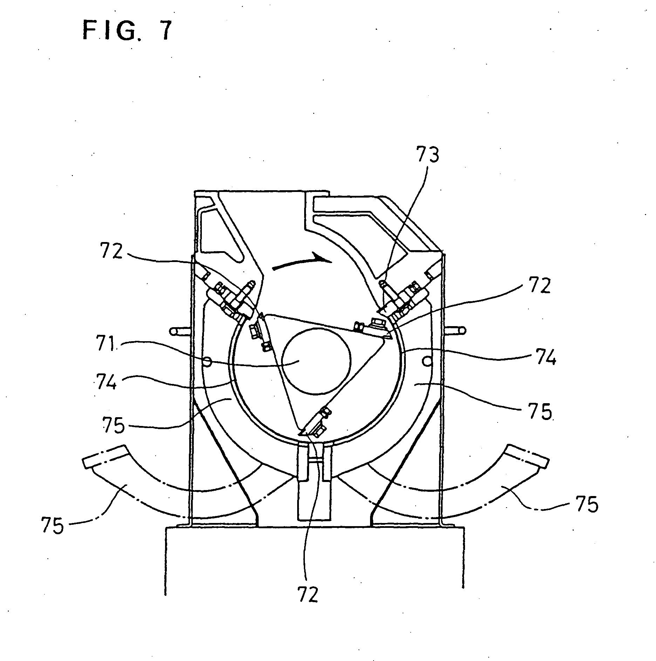

Fig. 7 is a view showing an inner structure of a pelletizer that can be used in the invention.

Description for References

10 evaporation vessel,
11 resin introduction port,
12 resin discharge port,
20 stirring blade,
21 log bone,
22 helical ribbon-shaped portion,
30 jacket,
31 heating medium introduction port,
32 heating medium discharge port,
41 longitudinal cutting blade,
42 lateral cutting blade (rotary blade),
43 lateral cutting blade (fixed blade),
44 guide,
45 cooling air blowing port,
51 roll cutter,
52 disk blade portion,
53 tip of the disk blade portion,
54 rotary shaft of the longitudinal cutting rotary blade,
55 longitudinal cutting rotary blade,
56 meshing portion,
57 scraper,
58 stripping portion of a scraper,
59 guide,
60 fixed blade,
61 lateral cutting rotary blade,
62 plate-like blade portion,
63 rotary shaft for the lateral cutting rotary blade,
64 gap at guide lower end,
71 rotor,
72 rotary blade;
73 fixed blade,
74 screen,
75 screen receptacle.

PREFERRED EMBODIMENT

A water soluble nonionic alkylene oxide resin (water soluble nonionic alkylene oxide copolymer) according to the invention and production process, etc. are to be specifically described in details but the range of the invention is not restricted to such descriptions and those other than the exemplified embodiments can be properly practiced within a range not deteriorating the gist of the invention.
The water soluble nonionic alkylene oxide resin referred to in the invention is not limited particularly so long as it mainly contains a constituent ingredient derived from an alkylene oxide monomer in the molecule structure and has an ether bond in the main chain and, specifically, this is preferably a copolymer formed by polymerizing, as starting monomers, a group of monomers containing ethylene oxide and a group of substituted oxirane compounds represented by the following structural formula (1):

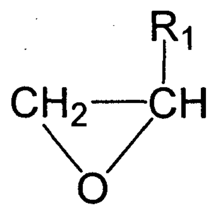

(1)

(in which $R_1$ is a substituent represented by Ra (Ra is one of groups of alkyl group, cycloalkyl group, aryl group, aralkyl group, (meth)acryloyl group and alkenyl group of from 1 to 16 carbon atoms) or $-CH_2-O-Re-Ra$ group (Re has a structure of: $-(CH_2-CH_2-O)_p-$ (p is an integer of from 0 to 10) ) . Polymerization is preferably ring-opening polymerization for oxirane groups of each of starting monomers.

$R_1$ group in the structural formula (1) described above is a substituent in the substituted oxirane compound (group) .

The substituted oxirane compound group may comprise only one kind of the substituted oxirane compounds or it may comprise two or more of them that can be shown by the structural formula (1) with no particular restriction.

The substituted oxirane compound represented by the structural formula (1) is not particularly limited and, specifically, can include, for example, propylene oxide, butyrene oxide, 1,2-epoxypentane, 1,2-epoxyhexane, 1, 2-epoxyoctane, cyclohexene oxide and styrene oxide, or methyl glycidyl ether, ethyl glycidyl ether and ethylene glycol methyl glycidyl ether. Further, in a case where the substituent $R_1$ is a cross-linkable substituent, that is, in a case where the substituent $R_1$ has an aryl group, alkenyl group, acryloyl group and methacryloyl group, it can include, for example, epoxybutene, 3,4-epoxy-1-pentene, 1,2-epoxy-5,9-cyclododecadiene, 3,4-epoxy-1-vinyl cyclohexene, 1,2-epoxy-5-cyclooctene, glycidyl acrylate, glycidyl methacrylate, glycidyl sorbate, and glycidyl-4-hexanoate, or vinyl glycidyl ether, allylglycidyl ether, 4-vinylcyclohexyl glycidyl ether, α-terpenyl glycidyl ether, cyclohexenyl methylglycidyl ether, 4-vinylbendylglycidyl ether, 4-allylbenzylglycidyl ether, ethylene glycol allylglycidyl ether, ethylene glycol vinyl glycidyl ether, diethylene glycol allylglycidyl ether, diethylene glycol vinyl glycidyl ether, triethyleneglycol allyl glycidyl ether, triethylene glycol vinylglycidyl ether, oligoethylene glycol allylglycidyl ether and oligoethylene glycol vinyl glycidyl ether. As described above, the compounds maybe used alone or two ormore kinds of themmaybe used together.

As the substituted oxirane compound group, it is preferred to essentially use the substituted oxirane compound having the cross-linkable substituent (substituent $R_1$ is a cross-linkable substituent) for use in the form of a cross linking product.

In a case where the water soluble nonionic alkylene oxide resin (water soluble nonionic alkylene oxide copolymer) is a copolymer formed by polymerizing a group of monomers containing ethylene oxide and the group of the substitutedoxirane compounds, the constituent ingredient derived from ethylene oxide in the molecular structure is preferably from 90 to 93% by weight and the constituent ingredient derived from the compound contained in the group of substituted oxirane compounds is from 7 to 10% by weight. In this case, the water soluble nonionic alkylene oxide resin may also contain a constituent ingredient derived from monomers other than the compounds contained in ethylene oxide and the substituted oxirane compound groups in the molecular structure within a range of satisfying the range for the content ratio of each of the monomers described above (ethylene oxide and compound contained in the substituted oxirane compound group).

The weight average molecular weight (Mw) of the water soluble nonionic alkylene oxide resin is not particularly limited but, specifically, it is preferably from 20,000 to 500,000, more preferably, from 30, 000 to 300,000, further preferably, 40,000 to 200,000. In a case where the weight average molecular weight is less than 20, 000, tack may possibly be caused in molding products. In a case where it exceeds 500, 000, molding may be difficult and fabricability and handlability may be lowered.

The molecular weight distribution (weight average molecular weight (Mw)/number average molecular weight (Mn)) of the water soluble nonionic alkylene oxide resin is not particularly limited but it is preferably 3 or less and, more preferably, 2 or less. In a case where the molecular weight distribution exceeds 3, it may possibly cause tack when formed into molding products and worsen the handlability.

The water soluble nonionic alkylene oxide copolymer can be prepared by a known method. That is, a monomer mixture may be polymerized while stirring in a solvent. The monomer mixture described above may contain other copolymerizable monomers in addition to the ethylene oxide and substituted oxirane compound described above as the stirring monomer. The polymerization method is not particularly limited but can include, for example, a solution polymerization method or precipitation polymerizationmethod. Among all, the solution polymerization method is preferred since the productivity is excellent and a solution polymerization method of conducting polymerization while supplying a starting monomer to a previously charged solvent is particularly preferred in view of safety such as easy removal of reaction heat.

The solvent includes, preferably, for example, aromatic hydrocarbon solvents such as benzene, toluene, xylene and ethyl benzene, aliphatic hydrocarbon solvents such as heptane, octane, n-hexane, n-pentane, and 2,2,4-trimethylpentane; cycloaliphatic hydrocarbon solvents such as cyclohexane and methylcyclohexane; ether solvents such as diethyl ether, dibutyl ether and methylbutylether; ethylene glycol dialkylether solvents such as ethylene glycol dimethyl ether, propylene glycol dimethyl ether, diethylene glycol dimethyl ether, and dipropylene glycol dimethylether; cyclic ether solvents such as THF (tetrahydrofuran) and, dioxane. Among them, toluene and xylene are particularly preferred. Further, those organic solvents described above not containing water at all are preferred. The charging amount of the solvent to the reactor maybe controlledproperlywhile considering desired physical properties of the copolymer, production amount, etc., with no particular restriction.

In the polymerization, reaction initiators (polymerization initiators), antioxidants and solubilizing agents generally used so far may be added and used.

The molecular weight of the obtained polymer can be controlled by controlling the amount of the reaction initiator to be used. The amount of use may be set, for example, on the basis of the charging amount of the monomer mixture.

The types of the polymerizing reaction and the polymerizing mechanisms in each of the polymerization methods (solution polymerization method, etc.) are not particularly restricted and include, preferably, anionic polymerization, cationic polymerization, coordinated polymerization and immortal polymerization. Among all, anionic polymerization is more preferred because polymers can be obtained with good reproducibility since those of high purity are easily available industrially, and the reaction initiator can be handled easily and control for the molecular weight is relatively easy.

The reaction temperature during polymerization may be property adjusted or controlled with no particular restriction and, for example, it is preferably lower than 120°C, more preferably, 110°C or lower and, further preferably, 100°C or lower.

The amount of the monomer mixture to be used is not particularly limited and, for example, the concentration of the water soluble nonionic alkylene oxide copolymer in the reaction product (polymer concentration) upon completion of the polymerization reaction may be a value exceeding 20% by weight, or may be a value exceeding 30% by weight. For the amount of the monomer mixture to be used, in a case where the polymer concentration described above is 20% by weight or less, the productivity is lowered to sometimes lack in the practical usefulness.

In a case where the water soluble nonionic alkylene oxide polymer is a copolymer formed by polymerizing a monomer mixture containing ethylene oxide and the group of the substituted oxirane compounds, the amount of the ethylene oxide and the substituted oxirane compounds to be used in the monomer mixture is not particularly limited and it may be set properly to such an extent that the viscosity of the obtained water soluble nonionic alkylene oxide copolymer is not lowered than required to lack in the practical usefulness. Further, in a case of using a substituted oxirane compound having cross linking substituent, it can be used at an optional ratio based on the entire amount of the substituted oxirane compound with no particular restriction.

Also in a case containing other monomers described above in the monomer mixture, the amount of use may be set while considering the polymer concentration of the obtained water soluble nonionic alkylene oxide copolymer, etc.

After the completion for the feeding of themonomermixture, etc. it is preferred to age reaction products in the reactor optionally. The conditions for aging (temperature, time, etc.) are not particularly limited but may be set properly. After the feeding or the aging described above, a solvent may be added further optionally to the obtained water soluble nonionic alkylene oxide copolymer to adjust the viscosity to a desired. The solvent used in this case is preferably the solvent used for polymerization. Further, together with the solvent, various kinds of stabilizers such as antioxidants or solubilizing agents may also be added.

Further, the ethylene oxide-butylene oxide copolymer resin referred to in the invention means those formed by addition copolymerization of mainly ethylene oxide and butylenes oxide and glycidyl ethers and other monomers may also be contained within a range not deteriorating the purpose of the invention. The constituent ratio of ethylene oxide, butylenes oxide, and glycidyl ethers in the copolymer has no particular restriction and those comprising from 90 to 95% by weight of ethylene oxide, from 3 to 10% by weight of butylene oxide and from 0 to 5% by weight of glycidyl ethers are used generally in a case of application to electrochemical use. The molecular weight (weight average molecular weight here and hereinafter) of the resin is about from 20,000 to 500,000 and, preferably, about from 20, 000 to 200, 000. Referring to the viscosity of the resin, the viscosity of a solution before desolvation is about 100 mPa·s at 80°C but it reaches a high viscosity of from about several hundred thousands to several millions of Pa·s at 80°C after desolvation.

1. Method of removing solvent from resin solution

The method of desolvation from the solution of the water soluble nonionic alkylene oxide resin according to the invention has a feature, as described above, of desolvation by using the apparatus comprising the evaporation vessel where a resin solution is charged, and a stirring blade having a helical ribbon-shaped portion provided in the

evaporation vessel in which the resin solution is scraped up and coated to the inner wall surface of the evaporation vessel upon rotation of the stirring blade.

The kind of the solvent to be removed from the resin solution is not particularly limited and it is assumed that mainly an organic solvent such as toluene is a target in the inventionbut the methodof the invention is generally applicable to solvents also including an inorganic solvent such as water.

In the resin solution, various additives may be contained in addition to the copolymer resin and the solvent. Examples of the additives include antioxidants, etc. required in the subsequent steps or the resin.

In the solvent removing apparatus used in the invention, a stirring blade having a helical ribbon-shaped portion is provided inside the evaporation vessel. Specific example of the stirring blade includes a log bone blade, helical ribbon blade, and double helical ribbon blade. Among them, Fig. 1 shows an example of an apparatus provided with the log bone blade.

Fig. 1 shows an evaporation vessel 10, a resin introduction port 11, a resin discharge port 12, a stirring blade 20, a log bone 21, a helical ribbon-shaped portion 22, a jacket 30 filled with a heating medium, a heating medium introduction port 31, and a heating medium discharge port 32, respectively. As shown in the drawing, the evaporation vessel 10 is substantially in a circular cylindrical shape. In the stirring blade 20, two ribbon-shape portions 22 are wound around the log bone 21 to form a double helix. The ribbon-shape portions 22 are close to the inner wall of the evaporation vessel 10 such that they can scrape up the resin solution to the inner wall of the vessel as will be described later.

When an EO-BO type copolymer solution is introduced to the evaporation vessel having the structure as described above to start desolvation, since a great amount of the solvent is present at the initial stage of evaporation, the viscosity is low and the evaporation speed is high. However, as evaporation proceeds and the amount of the solvent decreases, the viscosity increases and the evaporation speed lowers along with increase of the viscosity. In this case, the liquid level dose not change even when the viscosity increases in a case of using an anchor blade or the like. However, in a case of using the stirring blade having the helical ribbon-shaped portion as described above, the resin solution with the viscosity being increased is scraped up by the blade and the liquid surface rises at the portion of the vessel wall and the resin solution is coated to the wall surface. This greatly increases the area of heat conduction to enable desolvation without lowering the evaporation speed of the solvent.

For preventing the degradation of the resin during desolvation, it is preferred to remove oxygen by nitrogen substitution or depressurization to about 3 to 50 kPa in the evaporation vessel. Use of the method is preferred, particularly, for a resin that tends to undergo thermal degradation since the evaporation operation can be conducted at a low heating temperature when the solvent is removed in a depressurized system. Further, removal of oxygen can also suppress the decomposition of the antioxidant added to the resin solution.

Further, by property heating the inside of the evaporation vessel, the evaporation efficiency can be improved. For this purpose, the apparatus shown in Fig. 1 is adapted such that a heating medium such as steam or an organic thermal medium can be passed through the jacket.

More specifically, in a state where the solvent is present in a great amount, the temperature inside the vessel rises slightly by the evaporation latent heat of the solvent but as the evaporationproceeds and the evaporation speed lowers, since the evaporation latent heat also decreases, temperature in the vessel rises. Accordingly, the temperature difference relative to the heating medium is reduced to decrease the heating efficiency. In order to prevent this, the temperature for the heating medium is set higher to control the temperature of the heating medium such that the difference between the temperature of the heating medium and the temperature in the vessel can be kept constant. The temperature difference in this case is, preferably, from 20 to 60°C and, more preferably, from 30 to 40°C. When the evaporation under reduced pressure is adopted as described above, the temperature difference between the temperature in the vessel and that of the heating medium can be made larger and the evaporation speed can be increased more.

The temperature in the vessel during removal of the solvent, that is, the temperature of the water soluble nonionic alkylene oxide resin is within a range, preferably, from 40 to 300°C, more preferably, from 60 to 250°C and, further preferably, from 90°C to 200°C. By satisfying the temperature range, it is possible to control the concentration of the solvent as will be described later after the desolvation and the water content to be described later can also be controlled. In a case where the temperature upon desolvation is lower than 40°C, the remaining solvent may possibly be increased. In a case where it exceeds 300°C, the water soluble nonionic alkylene oxide resin per se may possibly be decomposed thermally.

After the removal of the solvent, by recovering the resin after lowering the temperature in the vessel (resin), thermal degradation can be prevented even when it is taken out into atmospheric air and decomposition of the antioxidant can be prevented in the system incorporated with the antioxidant.

In the water soluble nonionic alkylene oxide resin after desolvation, the concentration of the solvent contained is, preferably, 0.01 to 30% by weight, more preferably, from 0.05 to 20% by weight and, further preferably, from 0.1 to 10% by weight. For the concentration of the solvent if it is intended to be less than 0.01% by weight, since a severer condition is necessary for the desolvation, this may possibly lead to thermal degradation of the water soluble resin to

lower the performance. Further, in a case where it exceeds 30% by weight, tack caused to the water soluble resin after the desolvation to possibly cause blocking or the like.

For the water soluble nonionic alkylene oxide resin after the desolvation, it is preferred that the water content is also controlled simultaneously with the desolvation. Specifically, while it is not limited particularly, the content is more preferably 300 ppm or less at the instance after the desolvation while considering the water content in the resin obtained by the manufacturing method of the invention.

Examples of the present invention are to be shown below, but the invention is not restricted to them.

In the following examples and comparative examples, the molecular weight of the polymer, the residual amount of the solvent in the resin after desolvation and the amount of antioxidants were measured as described below.

Molecular weight: measured by using GPC. Measuring conditions are as follows;

Column: Guard column PWXL + G5000 PWXL
+ G4000 PWXL + G3000 PWXL
+ G2500 PWXL (all manufactured by Toso Co.)
Column size : 7.8 mmϕ × 30 cm
Column temperature: 40°C
Eluent: Acetonitrile/0.08M - sodium acetate solution = 50/50 (volume ratio)
Flow rate: 1.0 ml/min
Detector: Differential diffraction detector
Standard substance: Polyethylene oxide manufactured by Tosoh (Co.) molecular weight, 20,000 to 900,000.

Residual solvent amount of solvent and amount of antioxidant: measured by using liquid gas chromatography. Measuring conditions are as follows:

Specimen preparation: Dissolved with acetonitrile to 5% by weight concentration
Column: Inertsil ODS-3 5 μm (manufactured by GL Science Co.)
Column size: 4.6 mmϕ × 150 mm
Column temperature: 40°C
Flow rate: 1 ml/min
Eluent: acetonitrile/0.1 wt% aqueous phosphoric acid solution = 85/15 (volume ratio)
Detector: UV detector
Wavelength: 254 mm

(Synthesis Example 1-1)

150 kg of dehydrated toluene was charged in an autoclave equipped with a stirrer, 27 g of sodium methylate was added as a catalyst and temperature was elevated up to 100°C and, while controlling the pressure to 200 kPa or lower and a temperature to 120°c or lower, ethylene oxide, 1,2-butylene oxide, and allyl glycidyl ether were successively added at a ratio of 90:7:3 (weight ratio) so as to be 100 kg in total, and reacted to obtain a resin (polymer) solution. The composition of the obtained resin solution (amount of resin and amount of solvent) and the molecular weight are as shown in Table 1.

(Example 1-1)

Desolvation of the obtained resin solution was conducted in accordance with the following procedures by using a stirrer for high viscosity provided with a jacket having a log bone blade as shown in Fig. 1 (manufactured by Shinko Pantec Co. ) . A dibenzyl type heat medium (manufactured by Soken Chemical Co.) was introduced into the jacket.

That is, after removing oxygen by substituting an evaporation vessel with nitrogen, 200 kg of the resin solution and an antioxidant at 5250 ppm by weight based on the resin in the resin solution were charged, and mixed for 10 min and desolvation was started. Upon starting the desolvation, the vacuum degree was controlled to 32 kPa, the temperature in the vessel was controlled to 70°C, and the thermal medium was controlled to 100°C. Sampling was conducted at the instance where degree of vacuum was 6 kPa, the temperature in the vessel was 125°C and the temperature of the thermal medium was 155°C.

The time for the desolvation, the residual amount of the solvent, the amount of the antioxidant in the specimen and the polymer molecular weight after the desolvation are as shown in Table 2.

(Comparative Example 1-1)

Desolvation was conducted by using the same resin solution and the apparatus as those in Example 1-1 and

under the identical conditions except for using a normal pressure system. Sampling was conducted 3.5 hours after like Example 1-1.

(Synthesis Example 1-2)

A resin solution having a composition and the molecular weight shown in Table 1 was obtained in the same manner as in Example 1-1 except for changing the monomer composition to EO:BO=92:8

(Example 1-2)

The obtained resin solution was charged in a reactor (3 L volume) equipped with a stirrer (double ribbon blade) for high viscosity having a jacket and the solvent was removed. That is, 1.7 kg of the resin solution and an antioxidant at a ratio of 4400 weight ppm based on the resin in the resin solution were charged in an evaporation vessel and, after mixing for 10 min, the desolvation was started. Upon starting the desolvation, the vacuum degree was 32 kPa, the temperature in the vessel was 70°C and the temperature of the thermal medium was 100°C. Sampling was conducted at the instance where the degree of vacuum was 6 kPa, the temperature in the vessel was 140°C and the temperature of the thermal medium was 170°C. The time for the desolvation, the residual amount of the solvent in the specimen, the amount of the antioxidant and the polymer molecular weight after the desolvation are as shown in Table 2.

(Comparative Example 1-2)

Desolvation was conducted by using the same resin solution and the apparatus as those in Example 1-2 and under the identical conditions except for changing the stirring blade to the anchor type. Sampling was conducted 2.5 hours after like Example 1-2. The results are collectively shown in Table 2.

Table 1

| | Amount of resin (wt%) | Amount of solvent (wt%) | Amount of antioxidant (ppm) | Molecular weight (Mw) |
|---|---|---|---|---|
| Synthesis Example 1-1 | 50.0 | 50.0 | 5250 | 100,000 |
| Synthesis Example 1-2 | 52.0 | 48.0 | 4400 | 110,000 |

Table 2

| | Desolvation time (h) | Amount of residual solvent (wt%) | Amount of antioxidant (ppm) | Molecular weight (Mw) |
|---|---|---|---|---|
| Example 1-1 | 3.5 | 0.32 | 5060 | 100,000 |
| Comparative Example 1-1 | 3.5 | 5.30 | 2550 | 95,000 |
| Example 1-2 | 2.5 | 0.45 | 4227 | 110,000 |
| Comparative Example 1-2 | 2.5 | 3.50 | 4168 | 109,000 |

2. Method of manufacturing a resin containing cooling and solidification step

In the manufacturing step according to the invention, a water soluble nonionic alkylene oxide resin in a flowable state obtained by polymerization using a solvent and removed with the solvent by desolvation under heating is cooled to solidify to manufacture solid resins of various forms, in which the method includes a cooling and solidification step of bringing the resin in the flowable state into contact with a metal plate.

The water soluble nonionic alkylene oxide resin in the flowable state is a resin in a hot state and in a state of less shape retainability because this is the state after desolvation under heating. More specifically, it may be a resin in a molten state after desolvation under heating or may be a resin in a state not solidified completely which means a state of merely shaping (molding) the resin in the molten state. More specifically, it is a water soluble nonionic alkylene oxide resin after desolvation under heating at a resin temperature, preferably, from 40 to 300°C, more preferably, from

60 to 250°C and, further preferably, from 90 to 200°C. In the followings, the water soluble nonionic alkylene oxide resin in the flowable state (hot state) is sometimes referred to as a water soluble nonionic alkylene oxide resin after desolvation.

The polymerization method using the solvent may be any of the methods used generally as described above, with no particular restriction. The solvent ingredient in the polymerization reaction solution after polymerization means a solvent used upon polymerization by the polymerization method using the solvent described above, and, in a case where other solvent is used after polymerization and incorporated in the polymerization reaction solution, such other solvent referred to herein can also be the solvent ingredient.

Further, the desolvation under heating is to remove the solvent ingredient from the polymerization reaction solution containing the water soluble nonionic alkylene oxide resin and the solvent after polymerization using the solvent, to obtain a water soluble nonionic alkylene oxide resin. The water soluble nonionic alkylene oxide resin after the desolvation is not restricted to those not containing the solvent completely but may be prepared by desolvation from the state of the polymerization reaction solution to a desired concentration described below by the desolvation.

For the method of desolvation, the apparatus and various conditions usedupondesolvation, themethodof removing solvent according to the invention described above can be used, but method of desolvation, usable apparatus and conditions to be set known so far can also be adopted with no particular restriction. The apparatus used upon desolvation (solvent removing apparatus) has no particular restriction but specifically, includes preferably, for example, a stirring vessel evaporator, downstream liquid column evaporator, thin film evaporator, surface renewing polymerization vessel, kneader, roll mixer, intensive mixer (so-called Banbury mixer) and extruder, and the working conditions can be set property in accordance with the apparatus to be used.

The temperature during desolvation, that is, the temperature of the water soluble nonionic alkylene oxide resin in the solvent removing device is within a range, preferably, from 40 to 300°C, more preferably, from 60 to 250°C and, more preferably, from 90 to 200°C as described above.

The pressure during desolvation is generally within a range, preferably, from 13 to 100, 000 Pa, more preferably, from 133 to 70,000 Pa and, further preferably, from 1333 to 40,000 Pa. By satisfying the range of the pressure, the solvent can be controlled to the concentration described above after the desolvation and the water content to be described later can also be controlled. In a case where the pressure of the solvent during desolvation is less than 13 Pa, the solvent flashes to possibly cause foaming. In a case where it exceeds 100,000 Pa, it may possibly require such a temperature as decomposing the water soluble nonionic alkylene oxide resin. The pressure during desolvation means the pressure in the vessel of the solvent removing device.

Since the water soluble nonionic alkylene oxide resin after desolvation is a resin obtained by desolvation under heating as described above, the resin is warm and has fluidity. The temperature of the water soluble resin after desolvation is not particularly limited but specifically it is, preferably, from 40 to 300°C, more preferably, from 60 to 250°C, and further preferably, from 90 to 200°C.

In the water soluble nonionic alkylene oxide resin after desolvation, the concentration of the solvent contained is, preferably, from 0.01 to 30% by weight, more preferably from 0.05 to 20% by weight and, further preferably, from 0.1 to 10% by weight.

Further, while the water content is not particularly limited in the same manner as described above, it is, more preferably, 300 ppm or less at the instance after desolvation. Water is contained, for example, in the solvent used in the polymerization and is contained in the resin upon synthesis of the resin. In a case where the water content is controlled upon desolvation, it may be conducted with no particular restriction, specifically, by elevating the temperature during desolvation and/or increasing the depressurization degree during desolvation.

The water content in the resin described in the present specification can be measured by using, for example, the method described in examples to be described later.

The water soluble nonionic alkylene oxide resin after desolvation may not need to contain an antistatic agent. Since the water soluble resin is obtained not by heat drying but by desolvation after polymerization using the solvent, it is not necessary to incorporate the antistatic agent in view of electrostatic charging of the resin caused by friction between each of the resins in the drying under heating, etc.

The viscosity of the water soluble nonionic alkylene oxide resin after desolvation, at a solid content of 99% by weight ormore is, preferably, from 500 to 10, 000 Pa·sec, more preferably, from 1, 000 to 8, 000 Pa·sec and, further preferably, from 1,500 to 6,000 Pa·sec at 100°C. In a case where it is less than 500 Pa·sec, it may possibly cause foaming and tack. In a case where it exceeds 10, 000 Pa·sec, the viscosity is excessively high to cause a possibility that the solvent can not be removed.

In the step of cooling and solidification by bringing the solution into contact with a metal plate (hereinafter sometimes referred to as cooling and solidification step) in the manufacturing method of the invention, the water soluble nonionic alkylene oxide resin after desolvation is brought into contact with a metal plate and thereby cooled to solidify (harden). The metal plate is, preferably, a metal plate or metal surface that can be brought into contact with a resin in a cooling device, for example, a drum cooler (for example, COMPACT CONTI COOLER; name of products manufactured by Tsubako K.I. Co.; Drum cooler DC; name of products manufactured by Mitsubishi Chemical Engineering Co.; Laminator; name of products manufactured by Modern Machinery Co., single belt cooler (for example, Steel Belt Cooler; name of products manufactured by Sandvic Co. ; Steel Belt Single Cooler; name of products manufactured by Nippon Steel Conveyer Co.), double steel belt cooler (for example, Double Steel Belt Cooler; name of products manufactured by Sandvic Co.). The metal plate or metal surface is preferably cooled to a desired temperature and can be cooled, for example, by blowing a coolant from the rear side of the metal plate or metal surface.

The cooling temperature of the metal plate or metal surface is not particularly limited but it is preferably at such a temperature capable of lowering the water soluble nonionic alkylene oxide resin to be cooled to solidify to a temperature lower than the crystallization temperature and/or melting point and, specifically, it is, for example, preferably, from 5 to 40°C, more preferably, from 10 to 30°C and, further preferably, from 15 to 25°C.

In the cooling and solidification step, in a case where the cooling device described above is used, the water soluble nonionic alkylene oxide resin after desolvation is discharged on the metal plate or metal surface and then cooled to solidify during transportation in any of the cases. Among the cooling devices described above, in a case of using the double steel belt cooler, the single belt cooler and the drum cooler, optional conditions for the production amount can be obtained easily by the selection of the temperature for the coolant and the kind for the coolant, as well as the selection of the width for the T dice and the width for the double steel, etc.

In the manufacturing method according to the invention, for conducting the cooling and solidification step of cooling and solidifying the water soluble nonionic alkylene oxide resin after the desolvation as described above, a molding step of previously molding the water soluble resin after desolvation may also be incorporated.

The molding step preferably includes, specifically, for example, (i) previous molding of the water soluble nonionic alkylene oxide resin after the desolvation into sheet-like, strand-like, plate-like or granular shape by an extruder or the like, or (ii) molding of the water soluble nonionic alkylene oxide resin after the desolvation by casting into a container as a molding die, with no particular restriction to them. In the invention, bringing of the water soluble nonionic alkylene oxide resin in a flowable state after the desolvation into contact with a metal plate for cooling and solidification may also be included in the concept of the molding step so long as it includes a process, for example, of spreading the resin into a desired sheet-shape simultaneously with contact. For example, the molding step referred to herein can also include the step of charging a water soluble nonionic alkylene oxide resin in a flowable state after desolvation into a cylindrical drum formed with a plurality of holes (of a desired diameter) on the lateral surface and rotating the drum with the center axis (cylinder axis) being horizontal thereby dripping the flowable resin through the holes onto the metal plate for cooling and solidification thereby molding the granular resin.

Among the specific examples for the molding step exemplified above, in order for sufficient cooling in the subsequent cooling and solidification step, molding by extrusion into a sheet-like or plate-like shape by the molding step (i) is preferred. Further, as a method of extrusion in the molding step (i) above, a method of attaching an extruder, polymer pump or gear pump to the outlet or resin discharge port of a solvent removing device, and extruding the resin while withdrawing the resin from the solvent removing device by further connecting an extruding machine.

The extruder is not particularly limited and, specifically, includes, preferably, for example, a single screw extruder, a twine screw extruder (for example, SUPERTEX $\alpha$II; name of products manufactured by Nippon Seikosho; BT-30-S2, name of products manufactured by Plastic Engineering Institute), SCR self cleaning type reactor (manufacturedbymitsubishi Heavy Industry Co. ) , etc. For extruding into a sheet-like or plate- like shape at a constant thickness, it is preferred for conducting extrusion by providing a T-dye to an extruder, etc. Further, for extrusion into a granular shape, it is preferred to conduct extrusion by providing a drop foamer (Roatfoam, name of products manufactured by Sandvic Co.) to an extruder.

Generally, in a case of extrusion at a constant thickness, the thickness of the extruded resin is, preferably, from 0.5 to 4 mm, more preferably, from 1 to 3 mm and, further preferably, from 1.5 to 2.5 mm while considering the cooling efficiency in the cooling and solidification step to be conducted successively, the size in a case of obtaining the same by final granulation, etc.

Themanufacturingmethodof the invention may also include a kneading step of kneading the water soluble nonionic alkylene oxide resin in a flowable state after desolvation with various kinds of stabilizers up to the conduction of the cooling and solidification step (up to the molding step in a case of conducting the molding step).

The stabilizer is not particularly limited but can specifically include, for example, heat stabilizers, photostabilizers, UV-absorbents, antioxidants, (oxidation preventive agents), corrosion inhibitors, light fastness improvers, plasticizers (for example, dioctyl phthalate, low molecular weight polyether compounds, etc.), fillers (carbon, etc.), surfactants (ethylene oxide type nonionic surfactants, etc.), and lubricants (calcium stearate, etc.). Usually, it is preferred to use (i) the stabilizer which was added before the desolvating treatment for the requirement in the manufacturing method of the invention and which was decreased and removed along with the desolvating process, or (ii) a stabilizer to be added after thedesolvating treatment for the requirement in the manufacturing method according to the invention.

Further, in the kneading step, various kinds of additives can be added and kneaded optionally in addition to the stabilizers described above and, specifically, fine organic or inorganic particles and low molecular weight compounds (low molecular weight compounds with boiling point of 300°C or lower (solvent)) can be added and kneaded preferably. Among them, fine organic or inorganicparticles canprovide an anti-blocking function, etc. in accordance with the purpose of use and the mode of use of the water soluble nonionic alkylene oxide resin. The fine organic particles can include, specifically, for example, fine particles polystyrene, polyethylene and polypropylene, and fine inorganic particles can include specifically, for example, silica, alumina, zirconia or composite oxides thereof.

The kneader used in the kneading step is not limited particularly but includes specifically, for example, a downstream liquid column evaporator (multi-tube heat exchanger type) (for example, Static mixer; name of product manufactured by Noritake Co.), twine screw evaporator (for example, KRC kneader (for example, S2 KRC kneader; name of products manufactured by Kurimoto Tekkosho Co., BT series; name of products manufactured by Plastic Engineering Institute and kneader ruder; name of products manufactured by Moriyama Seisakusho Co.), and single screw evaporator (for example, GT series; name of products manufactured by Plastic Engineering Institute). They are preferably connected from a solvent removing device by way of a polymer pump, gear pump or the like.

In a case where the molding step is further conducted after the kneading step, this may be conducted by attaching a polymer pump, gear pump, etc. to the bottom of the kneader for withdrawing the resin from the kneader and, further, connecting an extruder.

The manufacturing method of the invention may also include a pelletizing step of pelletizing the water soluble nonionic alkylene oxide resin obtained after the cooling and solidification step.

The device used for the pelletizing step is not limited particularly and specifically includes, for example, a sheet pelletizer (for example, Sheet Pelletizer SG(E)-220, name of products manufactured by Horai Co.), pulverizers (for example, pulverizer manufactured by Horai Co.) . Among them, the sheet pelletizer is preferred in that the grain size of the obtained pellets can be made uniform easily. The sheet pelletizer is not restricted particularly, and those having a function capable of cooling a cutterportion, particularly, a slitter roll portion with a coolant or cooling the resin at the portion with a cold blow is preferred in a case of cutting a resin having a low flowpoint. The coolingtemperatureisnot particularlylimited but it is preferably a temperature capable of lowering the temperature of the water soluble nonionic alkylene oxide resin to be pelletized to a temperature lower than the crystallization temperature and/or melting point. Specifically, it is preferably, from 5 to 40°C, more preferably, from 10 to 30°C and, further preferably, from 15 to 25°C.

The manufacturing method of the invention may further include a step of preventing moisture absorption of the water soluble nonionic alkylene oxide resin and/or a step of drying the water soluble nonionic alkylene oxide resin.

The step of preventing the moisture absorption of the water soluble nonionic alkylene oxide resin, that is, a step of applying a moisture absorption preventive treatment to the water soluble resin is to apply a treatment capable of reducing the water content taken from the manufacturing atmosphere into the water soluble resin as much as possible in a partial or entire portion of the manufacturing process contained in the manufacturing method according to the invention. Accordingly, it is not necessary, as a result, to completely suppress the increase of the water content of the resin in the resin applied with the treatment but it may usually suffice to apparently suppress the increase of the moisture absorption amount compared with a case of not applying such as treatment.

The moisture absorption preventive treatment is not particularly limitedbut specifically it includes, for example, a so-called film-type moisture removing treatment, a freezing moisture removing treatment and an adsorbent type moisture removing treatment.

The film-type moisture removing treatment is a treatment of forming a dry atmosphere, specifically, covering a desired region of regions including various kinds of devices and equipments andmovingpathof the water soluble nonionic alkylene oxide resin used in the manufacturing method of the invention with a highly air tight material and blowing dry air obtained by absorbing the water content of pressurized air (at relative saturation humidity of 100%) into hollow thread membranes by a compressor. The treatment can be conducted, for example, by using a hollow thread membrane separation type pressurized air dryer (MACDASS; name of products manufactured by Toshiba PlantBuildingCo.). Further, thepressurizedairispreferably at dew point of -30°C or lower, more preferably, at dew point of -40°C and, more preferably, at dew point of -50°C. In a case where the dew point of the pressurized air exceeds -30°C, the water content in the water soluble nonionic alkylene oxide resin increases to possibly lower the performance. Further, an inert gas such as nitrogen can also be used in addition to the dry air described above.

The freezing moisture removing treatment is, specifically, a treatment of forming a dry atmosphere by cooling pressurized air by a refrigerator and condensing and dehydrating water content in the pressurized air to obtain dry air.

The adsorbent type moisture removing treatment is, specifically, a treatment of adsorbing a water content to an adsorbent such as activated alumina thereby forming a dry atmosphere.

In the moisture absorption preventive treatment described above, increase of the concentration of the water content in the water soluble nonionic alkylene oxide resin during application of the treatment is, preferably, 250 ppm or less, more preferably, 200 ppm or less and, further preferably, 150 ppm or less. In a case where the increase in the concentration exceeds 250 ppm, the water content in the water soluble nonionic alkylene oxide resin increases to possibly lower the performance . Further, in a case where the water content in the water soluble nonionic alkylene oxide resin is within a desired range to be described later, at the instance the moisture absorption preventive treatment

is conducted, it is preferred that the water content in the water soluble resin after the moisture absorption preventive treatment is also kept within the desired range described above.

The step of drying the water soluble nonionic alkylene oxide resin described above, that is, a drying step can be conducted during various types of steps or simultaneously with various types of steps in the manufacturing methods, or it may be applied at a portion or at plural portions in the manufacturing process in the manufacturing method according to the invention.

The drying step is different from the moisture absorption preventive treatment described above in that a treatment of decreasing the water content more positively is conducted. Further, the drying step is a particularly effective step, for example, in a case where an atmosphere directly using water (for cooling metal plate) is present in the manufacturing steps of the invention, particularly, in the cooling and solidifying step described above. This is because the water content increases more remarkably than usual, in a case of processing the water soluble nonionic alkylene oxide resin in an atmosphere using such water.

The operation in the drying step is not particularly limitedbut specifically it can include preferably, for example, (i) blowing pressurized air from above and below after charging the water soluble nonionic alkylene oxide resin in a silo and circulating the same for drying, (ii) passing pressurized air for drying after charging the water soluble nonionic alkylene oxide resin into a conical dryer, or (iii) passing pressurized air for drying after charging the water soluble nonionic alkylene oxide resin to a air passing rotary dryer (rotary kiln, etc.), and one of the operations may be conducted or two or more of them may be used together.

In the drying step, the water content in the water soluble nonionic alkylene oxide resin can be decreased to an optional and desired water content by appropriately selecting and setting various types of drying methods, drying temperature, drying time, etc, described above and it is, specifically, preferred to decrease the water content in the water soluble resin so as to satisfy a desired range (specifically, 300 ppm or less) to be described later. The drying treatment can be applied either in a case where the water content in the water soluble nonionic alkylene oxide resin has already satisfied a desired range (specifically, 300 ppm or less) to be described later or not. The amount of water to be decreased in the drying step is not particularly limited but it is preferred that the amount is not so excessive while considering the cost of the drying treatment and the productivity. Specifically, in the water soluble nonionic alkylene oxide resin applied with the drying treatment, decrease of the concentration is, preferably, 27, 000 ppm or less, more preferably, 7000 ppm or less and, further preferably, 4700 ppm or less. In a case where the decrease of the concentration exceeds the range described above, the economical property and the productivity are poor, as well as it may possibly give undesired effects on the physical property of the water soluble nonionic alkylene oxide resin.

In the manufacturing method of the invention, in a case where the pelletizing step is conducted, a selection step of selecting particles of desired particle size may be included. The selection step is not particularly limited and, a treatment using a usually known sieve may be conducted. In view of the productivity of the resin particles, it is preferred, for example, to conduct selection by flowing a resin after the pelletizing step over a sieve at an inclined surface while applying vibrations, or conducting selection so as to rotate the resin after the pelletizing step on the inclined surface of the sieve, the sieve itself being a trumpet-like lateral shape, etc. For conducting the selecting step, the resin after the pelletizing step is preferably induced directly to the sieve as described above and selected.

The water soluble nonionic alkylene oxide resin obtained in the manufacturing method of the invention contains the water content, preferably, of 300 ppm or less, more preferably, 250 ppm or less and, further preferably, 200 ppm or less. It may suffice that the water content referred to herein can be attained for the nonionic alkyl oxide water soluble resin obtained finally, and it is not necessary that the content is attained at a partial or entire portion in the course of manufacture in the manufacturing method of the invention. In a case where the water content exceeds 300 ppm, since the dielectric constant of the resin increases to a level than required, in a case, for example, of using the obtained water soluble nonionic alkylene oxide resin to a protective film for color filters, etc. since the resin becomes conductive, it brings about a fatal lowering of the function as the protective film. Further, since the water content reacts with metal ions, etc. to form hydroxides, etc, in a case where the water soluble nonionic alkylene oxide resin is used, for example, to an electrolyte layer of polymer cells, the resin forms an insulative layer at the boundary between the metal and the electrolyte layer to lower the potential, and also a voltage continuously increases under a constant current to worsen the cycle characteristic of the cell. Further, in a case of the application use to adhesive tapes for semiconductors, the water content induces erroneous operation and, in a case of urethane foams, the water content reacts with isocyanate groups failing to proceed the reaction sufficiently, and this may lower the physical property or cause foaming.

The water soluble nonionic alkylene oxide resin obtained by the manufacturing method according to the invention can be used preferably, while not particularly limited, as polymeric materials for a wide range of application uses such as, for example, polyurethane resins for adhesives, paints, sealants, elastomers, flooring materials, etc. , as well as rigid, soft or semi-rigid polyurethane resins and, further, surfactants, sanitary products, deinking agents, lubricants, hydraulic fluids, separators, electrodes and polymeric electric layers for use in polymer cells, color filter protective films, light sensitive resins usable for resists and flexographic printing materials, etc. adhesive tapes for use

in semiconductors and urethane foams.

The present invention is to be describedmore specifically by way of examples but the invention is not restricted to such examples. "Parts by weight" is sometimes referred to simply as "parts" hereinafter for the sake of convenience.

At first, the definition and the measuring method for the water content in the water soluble nonionic alkylene oxide resin to be described in the examples of the invention are to be shown below.

(Water content in water soluble nonionic alkylene oxide resin)

Awater soluble nonionic alkylene oxide resin (for example formed into square pellets) previously sealed in a highly sealing vessel (for example, aluminum laminated bag), toluene as a solvent (previously decreased with the water content as much as possible by a molecular sieve (Molecular Sieve 3Al.6 or Molecular Sieve 4A1. 6; name of products manufactured by Union Showa Co.), a glass container, and an injection syringe are placed in a glove box and dried for 2 hours or more.

After drying, 2g of the water soluble nonionic alkylene oxide resin and 18 g of toluene taken out of the highly sealing container are charged to the glass container, sufficiently dissolved by a magnetic stirrer to form a resin solution and then all of the resin solution is sampled by the injection syringe. Simultaneously, only the toluene is sampled by 18 g by another injection syringe.

Each of the injection syringe after sampling is taken out of the glove box to the outside and the water content in the resin solution and that only in the toluene are measured, respectively, by using AQUACOUNTERQ-7 (water content measuring device manufactured by Hiranuma Co.).

Based on the values for the water content (ppm) determined by the measurement, the weight of the water content (mg) contained in the resin solution and that only in the toluene are calculated respectively to determine the weight of the water content (mg) contained in the water soluble nonionic alkylene oxide resin based on the difference. Then, the water content (ppm) in the water soluble nonionic alkylene oxide resin is calculated by dividing the weight of the water content (mg) as the difference by the weight of the initially dissolved water soluble nonionic alkylene oxide resin (2 g).

(Example 2-1)

A polymerizing reaction solution (1) at a weight ratio of a water soluble nonionic alkylene oxide resin and toluene at 50% by weight/50% by weight ratio obtained by solution polymerization was supplied to a thin film evaporator (EXEVA, name of products manufactured by Shinko Panteck Co.) (jacket temperature: 180°C, degree of vacuum: 6665 Pa) , the polymerizing reaction solution (1) was concentrated by desolvation, and discharged through a T-die (sheet die) (150 mm width, 2.3 mm gap) equipped to the thin film evaporator at a temperature of 145°C and a discharging rate of 15 kg/h, to obtain a sheet-like water soluble nonionic alkylene oxide resin (1) with a toluene content of 0.16% by weight. The water soluble nonionic alkylene oxide resin (1) is a resin having a structural unit derived from ethylene oxide, a structural unit derived from butylene oxide and a structural unit derived from allylglycidyl ether at a ratio of 378 parts, 25.2 parts and 16.8 parts in this order. Further, the water content in the watersoluble nonionic alkylene oxide resin (1) at this instance was 60 ppm.

The discharged sheet-like water soluble nonionic alkylene oxide resin (1) was supplied to the upper surface of a lower belt of a double belt cooler (double belt cooler; name of products manufactured by Sandvic Co.). In this case, the double belt cooler was operated at a speed of from 0.85 to 0.90 m/min, at a temperature of cooling water of 23.3°C, with a gap between upper and lower belts of 2.0 mm, and under a water pressure of 0.20 Mpa.

A sheet of the water soluble nonionic alkylene oxide resin (1) cooled to 25°C or lower by the double belt cooler was supplied to a sheet pelletizer (SG (E) -220; name of products manufactured by Horai Co.) . In this case, the sheet pelletizer was operated at a frequency of 8 to 9 Hz for a motor for longitudinal cutting blades, at a take-up speed of from 0.88 to 0.99 m/min and at a frequency of 13 to 15 Hz for a motor for lateral cutting blades, and a cold air (16 to 17°C) was blown by a spot cooler to a portion of the lateral cutting blades.

The thus obtained square pellet of the water soluble nonionic alkylene oxide resin (1) had a size of 1.7 to 2.4 mm × 4.0 mm × 2.5 to 3.0 mm, with the toluene content of 0.16% by weight. Further, the water content of the obtained square pellet was 4120 ppm.

(Example 2-2)

A polymerizing reaction solution (2) at a weight ratio of a water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 180°C, degree of vacuum: 6665 Pa) , the polymerizing reaction solution (2) was concentrated by desolvation, and discharged through a T-die. (150

mm width, 2.3 mm gap) equipped to the thin film evaporator at a temperature of 145°C and at a discharging rate of 18 kg/h, to obtain a sheet-like water soluble nonionic alkylene oxide resin (2) with a toluene content of 0.26% by weight. The water soluble nonionic alkylene oxide resin (2) was a resin having a structural unit derived from ethylene oxide, a structural unit derived from butylene oxide and a structural unit derived from allylglycidyl ether at a ratio of 378 parts, 15 parts and 16 parts in this order. Further, the water content in the water soluble nonionic alkylene oxide resin (2) at this instance was 80 ppm.

Thedischargedsheet-likewatersolublenonionicalkylene oxide resin (2) was supplied to the upper surface of a lower belt of a double belt cooler (double belt cooler; name of products manufactured by Sandvic Co.). In this case, the double belt cooler was operated at a speed of from 0.90 m/min, at a temperature of cooling water of 23.4°C, with a gap between upper and lower belts of 2.0 mm, and under a water pressure of 0.20 Mpa.

A sheet of the water soluble nonionic alkylene oxide resin (2) cooled to 25°C or lower by the double belt cooler was supplied to a sheet pelletizer (SG (E) -220; name of products manufactured by Horai Co. ) . In this case, the sheet pelletizer was operated at a frequency of 8 Hz for a motor for longitudinal cutting blades, at a take-up speed of from 0.88 m/min and at a frequency of 11.5 to 12.0 Hz for a motor for lateral cutting blades, and a cold air (17 to 18°C) was blown by a spot cooler to a portion of the lateral cutting blades.

The thus obtained square pellet of the water soluble nonionic alkylene oxide resin (2) had a size of 1.5 to 2.5 mm × 4.0 mm × 3.0 to 3.5 mm, with the toluene content of 0.26% by weight. Further, the water content of the obtained square pellet was 6170 ppm.

(Example 2-3)

A polymerizing reaction solution (3) at a weight ratio of a water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 180°C, degree of vacuum: 6665 Pa) , the polymerizing reaction solution (3) was concentrated by desolvation, a water soluble nonionic alkylene oxide resin (3) with toluene content of 0.50% by weight after desolvation was transported by way of a gear pump at a temperature of 175°C and at a transportation speed of 40 kg/h to a KRC kneader (S2KRC kneader; trade name of products manufactured by Kurimoto Tekkosho). The water soluble nonionic alkylene oxide resin (3) was a resin having a structural unit derived from ethylene oxide, a structural unit derived from butylene oxide and a structural unit derived from methylglycidyl ether at a ratio of 180 parts, 12 parts and 8 parts in this order. Further, the water content in the water soluble nonionic alkylene oxide resin (1) at this instance was 100 ppm.

A stabilizer support port was disposed downstream to the resin supply port of the KRC kneader, and a phenolic antioxidant was charged as a stabilizer by 0.2 kg/h. In this case, the KRC kneader was operated at a heating temperature of 180°C and at a number of rotation of paddle of from 57 to 114 rpm.

From the KRC kneader, a water soluble nonionic alkylene oxide resin (3) at a temperature from 170 to 185°C kneaded with the phenolic antioxidant was obtained at a discharging speed of 40.6 to 41.8 kg/h. The concentration of the stabilizer was 4030 to 4040 ppm.

(Example 2-4)

A polymerizing reaction solution (4) at a weight ratio of a water soluble nonionic alkylene oxide resin and toluene at 50% by weight/50% by weight ratio obtained by solution polymerization was supplied to a thin film evaporator (EXEVA, name of products manufactured by Shinko Panteck Co.) (jacket temperature: 180°C, degree of vacuum: 6665 Pa) , the polymerizing reaction solution (4) was concentrated by desolvation, a water soluble nonionic alkylene oxide resin (4) with toluene content of 0.45% by weight after desolvation was transported by way of a gear pump at a temperature of 175°C and at a transportation speed of 35 kg/h to a KRC kneader (S2KRC kneader; trade name of products manufactured by Kurimoto Tekkosho). The water soluble nonionic alkylene oxide resin (4) was a resin having a structural unit derived from ethylene oxide, a structural unit derived from butylene oxide and a structural unit derived from methylglycidyl ether at a ratio of 180 parts, 12 parts, and 8 parts in this order. Further, the water content in the water soluble nonionic alkylene oxide resin (4) at this instance was 70.ppm.

A stabilizer support port was disposed downstream to the resin supply port of the KRC kneader, and a phenolic antioxidant was charged as a stabilizer by 0.175 kg/h. In this case, the KRC kneader was operated at a heating temperature of 180°C and at a number of rotation of paddle of 114 rpm.

From the KRC kneader, a water soluble nonionic alkylene oxide resin (4) at a temperature of 190°C kneaded with a stabilizer was obtained. The concentration of the stabilizer was 5200 ppm.

From the discharge port of the KRC kneader, a water soluble nonionic alkylene oxide resin (4) kneaded with the stabilizer was discharged by way of a gear pump through a T-die (700 mm width, 2.0 to 2.5 mm gap) at 35 kg/h. The discharged sheet-like water soluble nonionic alkylene oxide resin (4) was supplied to the upper surface of a cooling

drum of a drum cooler (drum cooler DC; name of products, manufactured by Mitsubishi Chemical Engineering Co.). The drum cooler was operated at a number of rotation of drum of 0.3 to 0.4 rpm, at a speed of 25 to 34 m/h and at a temperature of cooling water of from 5 to 10°C.

A sheet of the water soluble nonionic alkylene oxide resin (4) cooled to 20°C or lower by the drum cooler was supplied to a sheet pelletizer (SG (E) -220, name of products, manufactured by Horai Co) . In this case, the sheet pelletizer was operated at a frequency of 3. 6 Hz to 5.5 Hz, for a motor for longitudinal cutting blades, at a take-up speed of from 0.4 to 0.6 m/min and at a frequency of 7.0 to 12.0 Hz for a motor for lateral cutting blades, and a cold air (corresponding to dew point -60°C) was blown by a spot cooler to a portion of the lateral cutting blades.

The thus obtained square pellet of the water soluble nonionic alkylene oxide resin (4) had a size of 2.0 mm × 4.0 mm × 3 . 0 mm, with the toluene content of 0.45% by weight. Further, the water content of the obtained square pellet was 900 ppm.

(Example 2-5)

A polymerizing reaction solution (5) at a weight ratio of a water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 180°C, degree of vacuum: 6665 Pa), the polymerizing reaction solution (5) was concentrated by desolvation, a water soluble nonionic alkylene oxide resin (5) with toluene content of 0.45% by weight after desolvation was transported by way of a gear pump at a temperature of 175°C and at a transportation speed of 35 kg/h to a KRC kneader (S2KRC kneader; trade name of products manufactured by Kurimoto Tekkosho). The water soluble nonionic alkylene oxide resin (5) was a resin having a structural unit derived from ethylene oxide, a structural unit derived from butylene oxide, and a structural unit derived from epoxy butene at a ratio of 378 parts, 25.2 parts and 16.8 parts in this order. Further, the water content in the water soluble nonionic alkylene oxide resin (5) at this instance was 90 ppm.

A stabilizer supply port was disposed downstream to the resin supply port of the KRC kneader, and a phenolic antioxidant was charged as a stabilizer by 0.175 kg/h. In this case, the KRC kneader was operated at a heating temperature of 180°C and at a number of rotation of paddle of 114 rpm.

From the KRC kneader, a water soluble nonionic alkylene oxide resin (5) at a temperature of 190°C kneaded with a stabilizer was obtained. The concentration of the stabilizer was 5200 ppm.

From the discharge port of the KRC kneader, a water soluble nonionic alkylene oxide resin (5) kneaded with the stabilizer was discharged by way of a gear pump through a T-die (700 mm width, 2.0 to 2.5 mm gap) at 35 kg/h. The discharged sheet-like water soluble nonionic alkylene oxide resin (5) was supplied to the upper surface of a cooling drum of a drum cooler (drum cooler DC, name of products, manufactured by Mitsubishi Chemical Engineering Co.). The drum cooler was operated at a number of rotation of drum of 0.3 to 0.4 rpm, at a speed of 25 to 34 m/h and at a temperature of cooling water of from 5 to 10°C.

A sheet of the water soluble nonionic alkylene oxide resin (5) cooled to 20°C or lower by the drum cooler was supplied to a sheet pelletizer (SG (E) -220; name of products, manufactured by Horai Co) . In this case, the sheet pelletizer was operated at a frequency of 3.6 Hz to 5.5 Hz for a motor for longitudinal cutting blades, at a take-up speed of from 0.4 to 0.6 m/min and at a frequency of 7.0 to 12.0 Hz for a motor for lateral cutting blades, and a cold air (corresponding to dew point -60°C) was blown by a spot cooler to a portion of the lateral cutting blades.

The thus obtained square pellet of the water soluble nonionic alkylene oxide resin (5) had a size of 2.0 mm × 4.0 mm × 3.0 mm, with the toluene content of 0.45% by weight. Further, the water content of the obtained square pellet was 1070 ppm.

(Example 2-6)

(Manufacturing method accompanied by moisture absorption preventive treatment)

A polymerizing reaction solution (6) at a weight ratio of a water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 180°C, degree of vacuum: 6665 Pa) , the polymerizing reaction solution (6) was concentrated by desolvation, a water soluble nonionic alkylene oxide resin (6) with toluene content of 0.45% by weight after desolvation was transported by way of a gear pump at a temperature of 175°C and at a transportation speed of 35 kg/h to a KRC kneader (S2KRC kneader; trade name of products manufactured by Kurimoto Tekkosho). The water soluble nonionic alkylene oxide resin (6) was a resin having a structural unit derived from ethylene oxide and a structural unit derived from butylene oxide at a ratio of 378 parts and 26 parts in this order. Further, the water content in the water soluble nonionic alkylene oxide resin (6) at this instance was 70,ppm.

Then, the operations identical with those in Example 2-4 were conducted except for using the water soluble nonionic alkylene oxide resin (6) instead of the water soluble nonionic alkylene oxide resin (4) and by previously providing a cover made of a tin plate so as to cover the resin discharge port of the T-die (sheet tie) , the drum cooler (drum cooler DC; name of products manufactured by Mitsubishi Chemical Engineering Co.) and a sheet exit thereof entirely and applying a moisture absorption preventive treatment.
The tin cover is provided with holes each of about 1.8 cm inner diameter by the number of one or two (at 15 cm distance) on every 9 cm and drying air was caused to flow through the holes.
Further, the dry air was generated by using generation apparatus of OILFREE SCROLL COMPRESSOR (manufactured by ANEST IWATANI Co.) and AIR DRYER RAX series (manufactured by ORION MACHINERY Co.). Specifically, the dry air was generated at $1Nm^3$/min, and a dry air was flown at a flow rate of 0.5 to 0.6 m/sec at the opening on the side of the resin discharge port and at the opening on the side of the sheet exit and a dry air was caused to flow at a flow rate of 0.3 to 0.5 m/sec inside the lateral surface of the cover made of tin plate (between the resin discharge port and the sheet exit) in the cover made of tin plate, so that external air does not flow backwardly into the cover. Further, in this case, when a dry air controlled for the dew point to -60°C, the dew point of air in the cover made of tin plate was from -60°C to -59°C. The dew point was measured by a ceramic water content sensor manufactured by Nagano Denki Industry Co.
The water content of the square pellet of the water soluble nonionic alkylene oxide resin (6) obtained by applying the moisture absorption preventive treatment described above was 128 ppm.

(Example 2-7)

(Manufacturing method of applying moisture absorption preventive treatment)

A polymerizing reaction solution (7) at a weight ratio of a water soluble nonionic alkylene oxide resin and toluene at 50% by weight/50% by weight ratio obtained by solution polymerization was supplied to a thin film evaporator (EXEVA, name of products manufactured by Shinko Panteck Co.) (jacket temperature: 180°C, degree of vacuum: 6665 Pa) , the polymerizing reaction solution (7) was concentrated by desolvation, a water soluble nonionic alkylene oxide resin (7) with toluene content of 0.45% by weight after desolvation was transported by way of a gear pump at a temperature of 175°C and at a transportation speed of 35 kg/h to a KRC kneader (S2KRC kneader; trade name of products manufactured by Kurimoto Tekkosho). The water soluble nonionic alkylene oxide resin (7) was a resin having a structural unit derived from ethylene oxide and a structural unit derived from butylene oxide at a ratio of 200 parts and 25 parts in this order. Further, the water content in the water soluble nonionic alkylene oxide resin (7) at this instance was 90 ppm.
Then, operations identical with those in Example 2-5 were conducted except for using the water soluble nonionic alkylene oxide resin (7) instead of the water soluble nonionic alkylene oxide resin (5), and applying a moisture absorption preventive treatment by using an integral type apparatus having a drum cooler and a sheet pelletizer (sheet cutter) in which from the supply port of the sheet-like resin discharged from the T-die to the exit portion of the pellet is surrounded with a highly sealing hood (drum cooler SC model; name of product manufactured by Mitsubishi Chemical Engineering Co.) instead of the drum cooler (drum cooler DC; name of products manufactured by Mitsubishi Chemical Engineering Co.) and the sheet pelletizer (SG(E)-220; name of products manufactured by Horai Co.). In the same manner as in Examples 2-5, it was adapted such that the sheet-like water soluble nonionic alkylene oxide resin (7) discharged from the resin discharge port of the T-die could be supplied to the upper surface of the cooling drum in the drum cooler portion of the integral type apparatus. The drum cooler portion was operated at a number of rotation of drum from 0.3 to 0.4 rpm, at a speed of 25 to 34 m/h and at a temperature of cooling water of 5 to 10°C. Further, the sheet pelletizer portion was operated at a frequency of from 3.6 to 5.5 Hz for a motor for longitudinal cutting blades, at a take-up speed of from 0.4 to 0.6 m/min and at a frequency for a motor for a lateral cutting blades of from 7.0 to 12.0 Hz, and cold air (corresponding to dew point -60°C) was applied to the lateral cutting blades by a spot cooler.
The hood surrounding the integral type apparatus was designed such that the generated dry air could be caused to flow in the hood.
Further, dry air was generated by using generation apparatus of OILFREE SCROLL COMPRESSOR (manufactured by ANEST IWATANI Co.) and AIR DRYER RAX series (manufactured by ORION MACHINERY Co.). Specifically, the dry air was generated at $1Nm^3$/min, and a dry air was flown into the hood at a flow rate of 0.5 to 0.6 m/sec from the sheet-like resin supply port and the pellet exit, so that external air did not flow backwardly into the hood. Further, in this case, when dry air controlled for the dew point to -60°C, the dew point of air in the hood was from -60°C to -59°C. The dew point was measured by a ceramic water content sensor manufactured by Nagano Denki Industry Co.
The water content of the square pellet of the water soluble nonionic alkylene oxide resin (7) obtained by applying the moisture absorption preventive treatment described above was 90 ppm.

(Example 2-8)

(Manufacturing method applying drying treatment)

The polymerizing reaction solution (8) at a weight ratio of a water soluble nonionic alkylene oxide resin and toluene at 50% by weight/50% by weight ratio obtained by solution polymerization was supplied to a thin film evaporator (EXEVA, name of products manufactured by Shinko Panteck Co.) (jacket temperature: 180°C, degree of vacuum: 6665 Pa) , the polymerizing reaction solution (8) was concentrated by desolvation, and discharged through a T-die (sheet die) (150 mm width, 2.3 mm gap) equipped to the thin film evaporator at a temperature of 145°C and a discharging rate of 15 kg/h, to obtain the sheet-like water soluble nonionic alkylene oxide resin (8) with a toluene content of 0.16% by weight. The water soluble nonionic alkylene oxide resin (8) is a resin having a structural unit derived from ethylene oxide and a structural unit derived from allylglycidyl ether at a ratio of 378 parts and 53 parts in this order. Further, the water content in the water soluble nonionic alkylene oxide resin (8) at this instance was 60 ppm.

Thedischargedsheet-likewatersolublenonionicalkylene oxide resin (8) was supplied to the upper surface of a lower belt of a double belt cooler (double belt cooler; name of products manufactured by Sandvic Co.). In this case, the double belt cooler was operated at a speed of from 0.85 to 0.90 m/min, at a temperature of cooling water of 23.3°C, with a gap between upper and lower belts of 2.0 mm, and under a water pressure of 0.20 Mpa.

A sheet of the water soluble nonionic alkylene oxide resin (8) cooled to 25°C or lower by the double belt cooler was supplied to a sheet pelletizer (SG (E) -220; name of products manufactured by Horai Co.) . In this case, the sheet pelletizer was operated at a frequency of from 8 to 9 Hz for a motor for longitudinal cutting blades, at a take-up speed of from 0.88 to 0.99 m/min and at a frequency of from 13 to 15 Hz for a motor for lateral cutting blades, and a cold air (16 to 17°C) was blown by a spot cooler to a portion of the lateral cutting blades.

The thus obtained square pellet of the water soluble nonionic alkylene oxide resin (8) had a size of 1.7 to 2.4 mm × 4.0 mm × 2.5 to 3.0 mm, with the toluene content of 0.16% by weight. Further, the water content of the obtained square pellet was 4120 ppm.

Then, the inside of a conical dryer used as a dryer (vacuum tumble dryer; name of products manufactured by Nikku Industry Co.) was previously substituted with nitrogen or pressurized air (dry air) sufficiently and, further, the temperature inside of the dryer was elevated to 20 to 30°C by heating the heat medium in a jacket to 20 to 30°C.

20 to 30 kg of square pellets of the water soluble nonionic alkylene oxide resin (8) was charged to the dryer from the charging port of the dryer which was sealed sufficiently with bolts to close tightly.

Then, after confirming the ON/OFF of valves, inside of the dryer was depressurized by a vacuum pump. After confirming that the degree of vacuum was stabilized at 133 Pa or less with no leakage, nitrogen was caused to flow at 5 to 10 liter/min to the inside of the dryer. It was kept in this state (that is, a state at an internal temperature of 20 to 30°C, at a flow rate of nitrogen from 5 to 10 liter/min, and under a reduced pressure of 133 Pa or less) for 23 hours or more to dry square pellets.

The water content of the square pellets of the nonionic alkylene water soluble resin (8) obtained by applying the drying treatment as described above was 216 ppm.

In the drying under the conditions described above, in a case where the water content of the square pellets of the water soluble nonionic alkylene oxide resin (8) before charging to the dryer was from 1500 to 2000 ppm, the water content could be lowered to 300 ppm by a drying treatment for 9 to 13 hours and, in the same manner, in a case where the water content of the square pellet before charging was from 2000 to 6000 ppm, the water content could be lowered to 300 ppm or less by a drying treatment for 24 hours.

(Example 2-9)

(Manufacturing method of applying, moisture absorbing preventive treatment and drying treatment)

A polymerizing reaction solution (9) at a weight ratio of the water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 180°C, degree of vacuum: 6665 Pa) , the polymerizing reaction solution (9) was concentrated by desolvation, the water soluble nonionic alkylene oxide resin (9) with toluene content of 0.45% by weight after desolvation was transported by way of a gear pump at a temperature of 175°C and at a transportation speed of 35 kg/h to a KRC kneader (S2KRC kneader; trade name of products manufactured by Kurimoto Tekkosho). The water soluble nonionic alkylene oxide resin (9) was a resin having a structural unit derived from ethylene oxide and a structural unit derived from epoxy butene at a ratio of 378 parts and 38 parts in this order. Further, the water content in the water soluble nonionic alkylene oxide resin (9) at this instance was 70 ppm.

Then, the operations identical with those in Example 2-4 were conducted except for using the water soluble

nonionic alkylene oxide resin (9) instead of the water soluble nonionic alkylene oxide resin (4) and by previously providing a cover made of tin plate so as to cover from the resin discharge port of the T-die (sheet tie), the drum cooler (drum cooler DC; name of products manufactured by Mitsubishi Chemical Engineering Co.) and a sheet exit thereof entirely and applying a moisture absorption preventive treatment.

In the cover of tin plate, holes each of about 1.8 cm inner diameter were formed on about every 9 cm by the number of one or two (about 15 cm distance) and drying air was caused to flow through the holes.

Further, dry air was generated by using a generation apparatus of OILFREE SCROLL COMPRESSOR (manufactured by ANEST IWATANI Co.) and AIR DRYER RAX series (manufactured by ORION MACHINERY Co.). Specifically, the dry air was generated at 1 $Nm^3$/min, and the dry air was caused to flow at a flow rate of 0.5 to 0.6 m/sec at the opening on the side of the resin discharge port and at the opening on the side of the sheet exit in the cover of tin plate, and the dry air was caused to flow at a flow rate of 0.3 to 0.5 m/sec inside the lateral surface of the cover made of tin plate (between the resin discharge port and the sheet exit), so that external air did not flow backwardly into the cover. Further, in this case, when a dry air controlled for the dew point to -60°C, the dew point of air in the cover made of tin plate was from -60°C to -59°C. The dew point was measured by a ceramic water content sensor manufactured by Nagano Denki Industry Co.

The water content of the square pellet of the water soluble nonionic alkylene oxide resin (9) obtained by applying the moisture absorption preventive treatment described above was 128 ppm.

The same drying treatment as in Example 2-8 was applied to the obtained square pallets of the water soluble nonionic alkylene oxide resin (9). Drying was conducted for 10 hours.

The water content of the square pellet of the water soluble nonionic alkylene oxide resin (9) obtained by applying the water absorption preventive treatment and the drying treatment was 90 ppm.

(Example 2-10)

The polymerizing reaction solution (10) at a weight ratio of the water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 180°C, degree of vacuum: 6665 Pa) , the polymerizing reaction solution (10) was concentrated by desolvation, the water soluble nonionic alkylene oxide resin (10) with toluene content of 0.45% by weight after desolvation was transported by way of a gear pump at a temperature of 175°C and at a transportation speed of 35 kg/h to a KRC kneader (S2KRC kneader; trade name of products manufactured by Kurimoto Tekkosho) The water soluble nonionic alkylene oxide resin (10) was a resin having a structural unit derived from ethylene oxide and a structural unit derived from methylglycidyl ether at a ratio of 378 parts and 57 parts in this order. Further, the water content in the water soluble nonionic alkylene oxide resin (10) at this instance was 70 ppm.

A stabilizer supply port was provided downstream to the resin supply port of the KRC kneader and a phenolic antioxidant was charged as a stabilizer at 0.175 kg/h. In this case, the KRC kneader was operated at a heating temperature of 180°C and the number of rotation of paddle of 114 rpm.

From the KRC kneader, the water soluble nonionic alkylene oxide resin (10) kneaded with the stabilizer at a temperature of 191°Cwas obtained in which the concentration of the stabilizer was 5200 ppm.

The water soluble nonionic alkylene oxide resin (10) kneaded with the stabilizer was fed from the discharge port of the KRC kneader to a tank equipped with a jacket and a stirrer and then discharged from the tank by way of a gear pump at 15kg/h and then supplied directly to the upper surface of a cooling drum of a drum cooler (Drum cooler DC; name of products manufactured by Mitsubishi Chemical Engineering Co.). The resin supplied to the upper surface of the cooling drum was brought into contact with a pressure roll, and put between the cooling drum and the pressure roll to form a sheet-like resin with a thickness substantially equal with the 2 mm clearance between the cooling drum and the pressure roll. In this case, the drum cooler was operated at a number of rotation of drum of 0.2 rpm, at a speed of 17 m/h and at a temperature of cooling water of from 5 to 10°C.

A sheet of the water soluble nonionic alkylene oxide resin (10) cooled to 20°C or lower by the drum cooler was supplied to a sheet pelletizer (SG (E) -220; name of products manufactured by Horai Co.) . In this case, the sheet pelletizer was operated at a frequency of from 8 to 9 Hz for a motor for longitudinal cutting blades, at a take-up speed of from 0.8 to 0.99 m/min and at a frequency of from 13 to 15 Hz for a motor for lateral cutting blades, and a cold air (16 to 17°C, corresponding to dew point -60°C) was blown by a spot cooler to a portion of the lateral cutting blades.

The thus obtained square pellet of the water soluble nonionic alkylene oxide resin (10) had a size of 1.7 to 2.4 mm × 4 mm × 2.5 to 3.0 mm, with the toluene content of 0.16% by weight. Further, the water content of the obtained square pellet was 900 ppm.

3. Manufacturing method of a pellet of a resin with low crystallization temperature

The manufacturing method of the invention is a method of manufacturing pellets from a water soluble nonionic alkylene oxide resin having a crystallization temperature within a range of 10 to 60°C.

For pelletizing the water soluble nonionic alkylene oxide resin in the invention, the resin is extruded in a molten state to a constant thickness under temperature control and the molten resin is solidified by contacting the resin with a metal surface kept at a temperature of the crystallization temperature or lower of the resin. In order to improve the cooling efficiency, it is preferred to extrude the molten resin at a temperature of [Tc + 80]°C or lower.

The temperature of the metal plate can be lowered to a crystallization temperature or lower of the resin by cooling with various kinds of coolants, and examples of the coolants include cooled air, water, ethylene glycol, etc. with no particular restriction to them.

The resin solidified as described above is introduced into a pelletizer and cut (pelletized). While a pelletizer used so far can be used properly for cutting the resin, a square cutting pelletizer of a structure shown in Fig 2 and Fig. 3 can be used suitably. Fig. 2 is a side elevational view showing the inner structure of a pelletizer and Fig. 3 is a front elevational view showing longitudinal cutting blades and lateral cutting blades thereof.

In the drawings, are shown longitudinal cutting blades 41, rotary blades 42 of the lateral cutting blades, fixed blades 43 of the lateral cutting blades, guides 44 and a cooling air blowing port 45, respectively. As shown in both drawings, the longitudinal cutting blades 41 are disposed in the upper portion of the pelletizer, and lateral cutting blades each comprising the rotary blades 42 and the fixed blades 43 are disposed therebelow respectively. The resin solidified into a sheet-shape is introduced from the upper portion of the pelletizer in the direction of an arrow, at first cut longitudinally by the longitudinal cutting blades 41 and successively cut laterally by the lateral cutting blades 42, 43 into square cut pellets of substantially cuboidal and rectangular shape and then discharged from a lower portion of the apparatus in the direction of the arrow.

More specifically, the longitudinal cutting blades 41 are provided to the circumferential surface of two cylindrical bodies each in a comb-shape respectively. That is, a plurality of blades are disposed in a state parallel in the circumferential direction and the sheet-like resin is continuously cut by shearing between the longitudinal cutting blades 41 to each other disposed to the two cylindrical bodies into a plurality of bar-shaped cut products. The resin cut into the bar shape is guided along opposed guides 44 and reaches the lateral cutting blades. The lateral cutting blades comprise the rotary blades 42 and fixed blades 43 in which the rotary blades 42 are disposed in parallel by the number of six in the longitudinal direction on the circumferential surface of the rotor. On the other hand, the fixed blade 43 is disposed near the lower end of the guide 44 and at a position capable of cutting the resin by shearing with the rotary blades 42 although not in contact with the rotary blades 42.

A cooling air blowing port 45 is preferably disposed to the pelletizer. This is provided in order to prevent fusion or melting of the resin by the heat generated by shearing caused between the fixed blades 43 and the rotary blades 42 of the lateral cutting blade and it is preferably disposed at a position capable of blowing air to the cutting portion shown in Fig. 2. The air blown into the pelletizer is preferably at a temperature of [Tc - 5]°C or lower and at a relative humidity of 70% or lower. An inert gas such as nitrogen may also be used instead of air so long as it is at a low temperature and a low humidity in the same manner.

Further, treatment of fluoro resin containing plating is preferably applied to the surface to contact with the resin, of the guides 44 between the longitudinal cutting blades 41 and the lateral cutting blades 42, 43 of the pelletizer, as well as to the surface to contact with the resin, of the rotary blades 42 and the fixed blades 43 of the lateral cutting blades. Fine particles such as a fluoro resin are uniformly distributed in an electroless nickel coating film and since the fluoro resin is present in the coating film under layer, it has an effect of keeping the resin deposition preventive effect for a long time even when the surface is worn different from the coating film in which the fluoro resin is impregnated at the surface. Specific example of the fluoro resin containing plating can include KANIFLON (registeredtrademark, of Nippon KanizenCo.) .

By using the pelletizer described above, pellets can be manufactured stably even for the water soluble nonionic alkylene oxide resinof low crystallization temperature. However, since it is difficult to completely shield the pelletizer from the external circumstance, the effect of the invention can not be obtained completely sometimes under a high temperature - high humidity circumstance by the effects thereof. Accordingly, it is preferred to conduct manufacture while installing a pelletizer in a room at an air temperature of [Tc + 5]°C or lower and at a relative humidity of 90% or lower and it is more preferred that the air temperature is at the crystallization temperature or lower and the relative humidity is at 80% or lower.

Examples of the invention are to be described below, but the invention is not restricted to them.

The crystallization temperature (Tc) in the present specification means a temperature measured by thermal analysis (DSC) as describedbelow and themolecularweightmeans numerical values measured by GPC analysis under the same measuring conditions as described above.

The thermal analysis was conducted by using DSC 220C manufactured by Seiko Instruments Co. As the

measuring conditions, the temperature was elevated from a room temperature to 100°C at a rate of 10°C/min in a nitrogen atmosphere, kept at 100°C for 1 min and then lowered from 100°C to -20°C at a rate of 5°C/min, during which the temperature at which the thermal peak reached maximum was measured and it was defined as a crystallization temperature.

(Synthesis Example 3-1)

150 kg of dewatered toluene was charged to a autoclave equipped with a stirrer, 27 g of sodium methylate was added as a catalyst, and ethylene oxide and 1, 2-butylene oxide were added successively at a ratio of 92:8 (weight ratio) by 100 kg in total while controlling the pressure to 200 kPa or less and a temperature to 120°C or lower, to obtain a resin (polymer) solution. The resin had a crystallization temperature of 19°C and the molecular weight of 110,000.

(Example 3-1)

The resin obtained by Synthesis Example 3-1 was melted and extruded from a melting vessel through a T-die to a predetermined surface of a double steel belt cooler in a sheet-shape of 600 mm width and 2.0 mm thickness. The temperature of the molten product was 70°C. The double steel belt cooler used in this case had 700 mm width and 9000 mm length with the belt speed being at 3.0 m/min, and a coolant was sprayed to the surface opposite to the metal surface of the double steel belt cooler in contact with the resin to cool to 15°C. The surface temperature of the cooled and solidified resin was 17°C at the exit of the double steel belt cooler.

The obtained resin sheet was introduced to a square pelletizer having a structure shown in Fig. 2 in which a fluoro resin containing plating of KANIFRON was applied to the guide and the lateral cutting blades, and cut into 3.5 mm width and 4.0 mm length. In this case, the temperature was 20°C and relative humidity was 75% at the place where the square pelletizer was placed, and a dehumidified cold blow at a temperature of 12°C and at a relative humidity of 70% was introduced into the square pelletizer. Fusion between the resins to each other by the heat of shearing was not observed for the cut resin. Further, while the inside of the square pelletizer was confirmed after 8 hours, deposition of the resin to the rotary blades, etc. was not observed.

(Comparative Example 3-1)

Pellets were manufactured in the same manner as in Example 3-1 except for air cooling the metal surface of the double steel belt cooler to 20°C.

As a result, the surface temperature of the resin was 21°C at the exit of the double steel belt cooler. However, the resin surface was not completely solidified and was sticky and the sheet was not stripped from the metal surface of the double steel belt cooler and pelletizing could not be conducted.

(Synthesis Example 3-2)

A resin solution was obtained in the same manner as in Synthesis Example 3-1 except for changing the monomer composition to ethylene oxide : 1,2-butylene oxide : acryl glycidyl ether = 90:7:3. The resin had a crystallization temperature of 22°C and a molecular weight of 100,000.

(Example 3-2)

The resin obtained by Synthesis Example 3-2 was melted and extruded from a melting vessel through a T-die to a predetermined surface of a small-sized drum cooler (300 mmϕ 300 mm length) into a sheet-shape of 200 mm width and 1.5 mm thickness. The temperature of the molten product was 80°C. The speed of the drum cooler was 0.15 m/min and cold water was circulated on the surface opposite to the metal surface of the drum cooler in contact with the resin and the temperature was cooled to 17°C. The surface temperature of cooled and solidified resin was 18°C at the exit of the drum cooler.

The obtained resin was introduced to the same square pelletizer as used in Example 3-1 and cut into 3.5 mm width and 4.0 mm length. In this case, the temperature was 25°C and the relative humidity was 80% at a place where the square pelletizer was placed, and a dehumidified cold blow at a temperature of 14°C and at a relative humidity of 65% was introduced into the square pelletizer. Fusion between the resins to each other by the heat of shearing was not observed for the cut resin. Further, while the inside of the square pelletizer was confirmed after 5 hours, deposition of the resin to the rotary blades, etc. was not observed.

(Comparative Example 3-2)

Pellets were manufactured in the same manner as in Example 3-2 except for air cooling the metal surface of the double steel belt cooler to 25°C.

As a result, the surface temperature of the resin was 23°C at the exit of the double steel belt cooler. The resin surface was not completely solidified and stickiness was observed for a portion.

While the sheet was introduced into the square pelletizer and pelletizing was conducted, cutting was no more possible due to deposition of the resin to the rotary blades, etc. 15 min after starting cutting.

4. Manufacturing method of resin pellet with less fluctuation of feeding amount

The invention concerns resin pellets with extremely less deviation between a predetermined feeding amount and an actual feeding amount and also with less fluctuation of the feeding amount on every feeding.

< First resin pellet >

A first resin pellet according to the invention (hereinafter sometimes simply referred to as a first resin pellet) includes as the target those resin pellets of a rectangular shape, in which those having two sides within a range of (L - 0.60) mm or more and (L + 0.60) mm or less occupy 98.0% or more assuming the number average length in the number distribution for each of them as L (mm), and those having remaining one sides within the range described above occupy less than 98.0%, and is further characterized by 1a) or 1b to be described later.

While the first resin pellet has a rectangular shape (also including cuboidal shape) , which is a so-called square pellet, it is not restricted to a case of having the shape of the rectangular body in a strict sense but any hexahedral body comprising three sets of planes opposed to each other and recognizable as a shape substantially identical or similar with that of the rectangular body should be contained as the rectangular shape described above. On the premise described above, the opposed planes may, for example, be of shapes different from each other (in view of shape, area, length of, the side, etc.) , may be in a relation parallel with each other or not, or each of the planar surfaces may have a curved surface to at least a portion thereof.

The rectangular shape has three sides corresponding to length, width and height. Specifically,assuming one arbitrary side in the rectangular shape as a longitudinal side, this merely means to have three types of sides in total, that is, the longitudinal side and sides substantially in relation of the lateral side and the height side and does not mean that any specified side in the rectangular shape is defined as the side for length, width or height. Since the rectangular shape is a hexahedral body as described above, three types of sides in a relation of length, width and height, each specifically has four sides respectively. When the length for length, width and height is measured each of the sides, the longest portion among the four sides described above is considered as the length for the side.

As described above, the first resin pellet includes as the target those resin pellets in which those having two sides within the range of (L - 0.60) mm or more and (L + 0.60) mm or less occupy 98.0% or more by the number ratio assuming the number average length in the number distribution for each of them as L (mm), and those having remaining one sides within the range described above occupy less than 98.0% by the number ratio. That is, the first resin pellet includes as the target those resin pellets in which those having only arbitrary two sides among the three sides within the range of length described above occupy 98 . 0 % or more by the number ratio. In the invention, the number average length L (mm) in the number distribution of the resin pellets is defined as the number average length in the number distribution when the target resin pellets are measured by the number of 100 or more, preferably, 200 or more and, more preferably, 300 or more, and the number ratio is defined as the ratio of number determined for the range of the predetermined length by the number distribution. For specific measuring methods and conditions for the number average length L (mm) and the number ratio in the number distribution, the method and conditions described in the examples to be described later are to be applied.

Among the three sides those having two sides within the range for the length of (L - 0.60) mm or more and (L + 0.60) mm or less may occupy 99.0% or more and those having remaining one sides within the range described above may occupy less than 99.0%, or among the three sides, those having two sides within the range for the length of (L - 0.55) mm or more and (L + 0.55) mm or less may occupy 98.0% or more and those having remaining one sides within the range described above may occupy less than 98.0%, or among the three sides, those having two sides within the range for the length of (L - 0.55) mm or more and (L + 0.55) mm or less may occupy 99.0% or more and those having remaining one sides within the range described above may occupy less than 99.0%. Further among the three sides, those having two sides within the range for the length of (L - 0.50) mm or more and (L + 0.50) mm or less may occupy 98.0% or more and those having remaining one sides within the range described above may occupy less than 98.0%, or among the three sides, those having two sides each within the range for the length of (L - 0.50) mm or more and (L + 0.50) mm or less may occupy 99.0% or more and those having remaining one sides within the range described

above may occupy less than 99.0%.

The resin pellet as the target of the first resin pellet in which those having two sides and the remaining one side among the three sides satisfy the range for the length and the number ratio means specifically those resin pellets in which the variation of the length in one side is larger compared with that of other two sides among the three sides for length, width and height of the rectangular resin pellet described above. The first resin pellet has a feature in that the conditions 1a) and 1b) to be described later are further satisfied for the one side described above with larger variation.

While the first resin pellet is characterized in that 1a) those within the range of (L - 0.60) mm or more and (L + 0.60) mm or less for the remaining one side occupy 70.0% or more, or 1b) L ≤ 3.0 mm for the remaining one side, further, it is not restricted that one of the conditions 1a) and 1b is satisfied but it may satisfy both of the conditions 1a) and 1b) which is a more preferred embodiment.

The condition 1a) described above, specifically, defines the condition of the lower limit for the variation of the length of the remaining one side that those within the range of (L - 0.60) mm or more and (L + 0.60) mm or less occupy 70.0% or more by the number ratio and, preferably, those within the range of (L - 0.60) mm or more and (L + 0.60) mm or less occupy 75.0% or more and, more preferably, those within a range of (L - 0 . 60) mm or more and (L + 0.60) mm or less occupy 80.0% or more. In the foregoings, for the range of (L - 0.60) mm or more and (L + 0.60) mm or less, it is preferably a range of (L - 0.55) mm or more and (L + 0.55) mm or less and, more preferably, a range of (L - 0.50) mm or more and (L + 0.50) mm or less.

In a case where the variation for the length of the remaining one side does not satisfy the range for the condition of lower limit, this results in the same problem as in the problem of the prior art described above and the subj ect of the invention can not possibly be solved easily. Specifically, in a case, for example, of feeding a previously set predetermined amount in the manufacturing step for various kinds of resin products, a deviation exceeding an error range may occur between the actual feeding amount and the predetermined amount and, further, also the feeding amount per one feeding may possibly deflect (vary) greatly on every feeding and, as a result, resin products of a desired set quality may not be produced at a high accuracy.

For the first condition 1a) described above, it is preferred to define the limitative conditions for the variation of the length of the remaining one side that those within the range of (L - 1.50) mm or more and (L + 1.50) mm or less occupy 98.0% ore more by the number ratio. That is, it is preferred to define the target of the first resin pellet with respect to the variation of the length for the remaining one side, by defining the minimum degree of variation to be satisfied as the entire resin pellets including those resin pellets satisfying the range of (L - 0.60) mm or more and (L + 0.60) mm or less and those resins not satisfying the range. The limitative condition described above is more preferably that those within the range of (L - 1.50) mm or more and (L + 1.50) mm or less occupy 99.0% or more and further preferably that those within the range of (L - 1.50) mm or more and (L + 1.50) mm or less occupy 100%. Further, for the range of (L - 1.50) mm or more and (L + 1.50) mm or less described above, it is more preferably within a range of (L - 1.25) mm or more and (L + 1.25) mm or less and, further preferably, within a range of (L - 1.00) mm or more and (L + 1.00) mm or less. In a case where the variation for the length of the remaining one side does not satisfy the range for the limitative conditions described above, even those satisfying the condition for the lower limit described previously also result in the same problem as that in the prior art described above and the subject of the invention can not possibly be solved easily.

In the first resin pellet satisfying the condition 1a) described above, the length for the remaining one side is preferably: L ≤ 4. 0 mm, more preferably, L ≤ 3.0 mm and, further preferably, L ≤ 2. 0 mm. Further, for the length of other having two sides, the length for one side is preferably L ≤ 3.5, more preferably, L ≤ 3.0 mm and, further preferably, L ≤ 2.0 mm. The length for the other side is preferably L ≤ 4.0 mm, more preferably, L ≤ 3.0 mm and, further preferably, L ≤ 2.5 mm. When each side of the first resin pellet capable of satisfying the condition 1a) described above satisfies the range described above, the foregoing subject can be solved more easily.

For the condition 1b described above, specifically, the condition for the upper limit is defined for the length of the remaining one side as L ≤ 3.0 mm, more preferably, L ≤ 2.5 mm. Further, in a case where L ≤ 3.0 mm, it is further preferably, 2.0 mm ≤ L, and further preferably, 2.5 mm ≤ L. In a case where L ≤ 2.5 mm, it is more preferably 1.5 mm ≤ L. In a case where the length for the remaining one side does not satisfy the range of the condition for the upper limit, this results in the same problem as that in the prior art described above and this can not possibly dissolve the subject of the invention easily. Specifically, in a case of feeding previously set predetermined amount in the manufacturing step of each types of resin products, a deviation exceeding an error range is caused between the actual feeding amount and the predetermined amount and, further, the feeding amount per one feeding may possibly deflect (vary) greatly on every feeding to result in a possibility that resin products of desired set quality can not be produced at a high accuracy.

Also for the condition 1b) described above, in the same manner as the condition 1a) described above, it is preferred to further define the limitative condition on the variation for the length of the remaining one side that those within the range of (L - 1.50) mm or more and (L + 1.50) mm or less occupy 98.0% or more by the number ratio. For

the details of the limitative condition, description on the condition 1a) described above can be applied in the same manner.

In the first resin pellet satisfying the condition 1b), the length for the remaining one side is as has been described above. The length for other having two sides, the length for one side is, preferably, $L \leq 3.5$ mm, more preferably, $L \leq 3.0$ mm and, further preferably, $L \leq 2.0$ mm, while the length for the other side is, preferably, $L \leq 4.0$ mm, more preferably, $L \leq 3.0$ mm, and, further preferably, $L \leq 2.5$ mm. When each side of the first resin pellet capable of satisfying the condition 1b) satisfies the range described above, the foregoing subject can be solved more easily.

< Second resin pellet >

The second resin pellet according to the invention, (hereinafter sometimes simply referred to as a second resin pellet) is characterized by satisfying the condition 2a) or 2b) to be described later assuming the number average weight in the number distribution as W (mg) and the specific gravity thereof as c.

The shape of the second resin pellet is not limited particularly and, for example, may be a rectangular shape (also including cuboidal shape hereinafter) or a hexahedral shape having at least one parallelogram plane or a pentahedral shape having a trigonal shape, or an indefinite shape formed by shredding and/or pulverizing at random. Among all, a rectangular shape is preferred in that it can be manufactured easily and efficiently to provide high productivity or in view of the bulk specific gravity upon packaging pellets. Further, for the details in a case of the rectangular shape, descriptions on the first resin pellets described above can be applied in the same manner.

The second resin pellet is further characterized by 2a) the weight thereof that those within the range of (W - 4.2c) mg or more and (W + 4.2c) mg or less occupy 70.0% or more by the number ratio or 2b) for the weight thereof that $W \leq 15.5c$ mg. However, it is not restricted to that one of the conditions 2a and 2b is satisfied but both of the conditions 2a) and 2b) may be satisfied, which is more preferred embodiment. In the invention, the number average weight W (mg) in the number distribution is defined as a number average weight in the number distribution when measured for the target resin pellets by the number of 100 or more, preferably, 200 or more and, further preferably, 300 or more, and the number ratio is defined as the ratio of number determined for the predetermined weight range by the number distribution. Specific measuring methods and conditions for the number average weight W (mg) and the number ratio in the number distribution described in the examples to be described later are applied.

For the condition 2a), specifically, the condition for the lower limit is defined for the weight of the resin pellets as the target that those within the range of (W - 4.2c) mg or more and (W + 4.2c) mg or less occupy 70.0% or more by the number ratio, preferably, those within the range of (W - 4.2c) mg or more and (W + 4.2c) mg or less occupy 75.0% or more and, more preferably, those within the range of (W - 4.2c) mg or more and (W + 4.2c) mg or less occupy 80.0% or more. Further, for the range of (W - 4.2c) mg or more and (W + 4.2c) mg or less described above, it is preferably a range of (W - 3.9c) mg or more and (W + 3.9c) mg or less and, more preferably, (W -3.6c) mg or more and (W + 3.6c) mg or less. In a case where the weight of the resin pellets as the target does not satisfy the range for the lower limit, this results in the same problem as that in the prior art described above and the subj ect of the invention can not possibly be solved easily. Specifically, in a case, for example, of feeding a previously set predetermined amount in the manufacturing step for various types of resin products, a deviation exceeding an error range between the actual feeding amount and the predetermined amount occurs and, further, the feeding amount per one feeding may possibly deflect (vary) on every feeding and, as a result, resin products of predetermined desired quality may not be produced at high accuracy.

For the condition 2a), it is further preferred for the weight of the resin pellets as the target to specify the limitative condition that those within a range of (W - 10.0c) mg or more and (W + 10.0c) mg or less occupy 98.0% or more by number ratio. That is, it is preferred to define the target of the second resin pellet with respect to the variation for the weight of the resin pellet as the target by defining the minimum degree of variation to be satisfied as the entire resin pellets including those resin pellets satisfying the range of (W - 4.2c) mg or more and (W + 4.2c) mg or less and those resins not satisfying the range. The limitative condition described above is more preferably that those within the range of (W - 10.0c) mg or more and (W + 10.0c) mg or less occupy 99.0% or more and, further preferably that those within the range of (W - 10.0c) mg or more and (W + 10.0c) mg or less occupy 100%. Further, for the range of (W - 10.0c) mg or more and (W + 10. 0c) mg or less described above, it is more preferably within a range of (W - 8.5c) mg or more and (W + 8.5c) mg or less and, further preferably, within a range of (W - 7.0c) mg or more and (W + 7.0c) mg or less. In a case where the variation for the length of the remaining one side does not satisfy the range for the limitative conditions described above, even those satisfying the condition for the lower limit described previously also result in the same problem as that in the prior art described above and the subj ect of the invention can not possibly be solved easily.

In the second resin pellet satisfying the condition 2a) , the weight of the resin pellet as the target is, preferably $W \leq 16.5c$ mg and, more preferably, $W \leq 16.0c$ mg and, further preferably, $W \leq 15.5c$ mg. When the second resin pellet satisfying the condition 2a) satisfies the range described above for the weight of the resin pellet as the target, the

subject described above can be solved more easily.

For the condition 2b), specifically, the condition for the upper limit is defined for the weight of the resin pellet as the target that W ≤ 16.5c mg and, preferably, W ≤ 16.0c mg and, further preferably, W ≤ 15.5c mg. Further, as the condition on the lower limit for the weight of the resin pellet as the target, it is, preferably, 10.8c mg ≤ W, more preferably, 12.9c mg ≤ W, further preferably, 14.6c mg ≤ W and, particularly preferably, 15.6c mg ≤ W. Preferred range for the upper and lower limits is set by proper combination with the condition on the upper limit described above. In a case where the weight of the resin pellet as the target does not satisfy the condition on the lower limit, this results in the same problem as that in the prior art described above and the subj ect of the invention can not possibly be solved easily. Specifically, in a case, for example, of feeding a previously set predetermined amount in the manufacturing steps for each types of resin products, a deviation exceeding an error range between the actual feeding amount and the predetermined amount occurs and, further, also the feeding amount per one feeding may possibly deflect (vary) greatly on every feeding and, as a result, resin products of predetermined desired quality can not be produced at a high accuracy.

In the same manner as in the condition 2a) described above, also the condition 2b) described above defines a limitative condition for the variation of the weight of the resin pellet as the target that those within the range of (W - 10.0c) mg or more and (W + 10.0c) mg or less occupy 98.0% or more by the number ratio. For the details of the limitative condition, descriptions for the condition 2a) described above can be applied in the same manner.

<Resin material>

The resin ingredient constituting the first and second resin pellets include the water soluble nonionic alkylene oxide resin. However, this is not limitative but all of known resin materials usable for various resin products can be applied. Specifically, they can include polypropylene, polyethylene, polyethylene oxide, polycarbonate, ABS, water soluble nonionic alkylene oxide copolymer (water soluble nonionic alkylene oxide resin) , PVC (polyvinyl chloride) , EVA (ethylene-vinyl acetate copolymer), unsaturated polyester, etc. The first and the second resin pellets are preferably resin pellets comprising water soluble nonionic alkylene oxide copolymer considering that they are used for such applications as polyurethane resin for adhesives, paints, sealants, elastomers, flooring materials etc. and rigid, soft or semi-rigid polyurethane resins, as well as surfactants, sanitary products, deinking materials, lubricants, hydraulic fluids, color filter protective films, flexographic printing plate materials and electrolyte layers for polymer cells. Various types of the resin materials described above can be prepared by applying various production methods and conditions usually known in the technical field of resin production.

Although not particularly limited, the water soluble nonionic alkylene oxide copolymer obtained by polymerization is preferablymoldedby extruding into a sheet-like or plate-like shape (as a resin sheet) considering that it is finally formed into resin pellets by a pelletizing (granulating) apparatus such as a sheet pelletizer at a goodproductivity. As the method of molding by extrusion into a sheet-shape or the like, a method of attaching an extruder, a polymer pump, a gear pump, etc. to a resin discharge port of a reaction vessel conducting polymerization or aging, further, connecting an extruder and extruding the water soluble nonionic alkylene oxide copolymer while extracting the same from a desolvation device.

The extruder is not particularly limited and preferably includes, for example, a single screw extruder, a twine-screw extruder (for example, SUPERTEX αII; name of products manufactured by Nippon Seikosho; BT-30-S2; name of products manufactured by Plastic Engineering Institute) and an SCR self cleaning reactor (manufactured by Mitsubishi Heavy Industry Co.). For extrusion into a sheet-shape or a plate-shape at a constant thickness, it is preferred to conduct extrusion while providing a T-die to the extruder.

Generally, the thickness of the resin sheet extrusion molded into a sheet shape or plate shape is, preferably, from 0.50 to 4.0 mm, more preferably, from 1.0 to 3.0 mm and, further preferably, from 1:5 to 2.5 mm considering the size, etc. in a case where it is obtained finally by pelletizing.

In the preparation of the water soluble nonionic alkylene oxide copolymer, any other step may be provided in addition to a polymerization step of polymerizing a monomer mixture while supplying the same to a solvent and stirring the same, an aging step of aging a reaction product obtained in the polymerization step, and a molding step for molding the obtained copolymer into a sheet-shape, etc. For example, succeeding to the polymerization step or the aging conducting optionally, a step of evaporating a solvent ingredient under heating from the obtained reaction product to recover a water soluble nonionic alkylene oxide copolymer (so-called desolvation step) may also be provided. For the methods and the conditions in each of the steps, techniques known so far may be applied.

Although not particularly limited, the first and the second resin pellets according to the invention can be used preferably as polymeric materials for wide variety of application uses; namely, for example, polyurethane resin for adhesives, paints, sealants, elastomers, flooring materials etc., rigid, soft or semi-rigid polyurethane resins, as well as surfactants, sanitary products, deinking materials, lubricants, hydraulic fluids, color filter protective films, flexographic printing plate materials and electrolyte layers for polymer cells.

Among them, in a case where the first and the second resin pellets are pellets comprised of the water soluble nonionic alkylene oxide copolymer, they can be used preferably as polymeric materials for wide variety of application uses such as, for example, polyurethane resin for adhesives, paints, sealants, elastomers flooring materials etc., rigid, soft or semi-rigid polyurethane resins, as well as surfactants, sanitary products, deinking materials, lubricants, hydraulic fluids and polymeric electrolytes, although not restricted to them particularly.

The first and the second resin pellets of the invention can be produced by the production process while applying various kinds of methods and conditions in the field of the resin pellet manufacturing technique known so far with no particular restriction. The manufacturing method of the invention shown below can be mentioned as a preferred manufacturing method.

(Manufacturing method of resin pellet)

The manufacturing method of the resin pellets according to the invention is a method of using a pelletizing apparatus capable of obtaining resin pellets by longitudinally cutting a resin sheet and lateral cutting the obtained resin strands. This is to be described specifically with reference to Figs. 4 to 6.

For longitudinally cutting the resin sheet, a roll cutter 51 is used. In the roll cutter 51, two longitudinal cutting rotary blades 55 arranged along the axial direction are disposed so as to mesh the blade disks 53 to engage with each other with respective rotational shafts 54 being horizontal and parallel with each other such that a plurality of disk blades 52 are arranged at an equal distance therebetween and the respective blade tips 53 are directed vertical to the axial direction of the rotational shaft 54, and the rotational direction is different between each other. The longitudinal cutting is conducted by supplying and shearing the resin sheet to an engaging portion 56 between the longitudinal cutting rotary blades 55 of the roll cutter 51.

The resin strand obtained by longitudinally shearing the resin sheet is discharged below the engaging portion 56 in accordance with the rotation of the respective longitudinal cutting rotary blades 55 being put between the gap of the respective disk blades 52 of the longitudinal cutting rotary blades 55. In this case, it is necessary to strip off the resin strand put between the gap portion from the longitudinal cutting rotary blades 55. Specifically, it is stripped by a scraper 57 facing a stripping portion 58 thereof to the gap portion. The scraper 57 may be of a structure integral with a guide 59 to be described later or a structure separated therefrom, with no particular restriction. In Fig. 4, the scraper 57 and the guide 59 of an integrated structure is shown.

The stripped resin strand is guided downwardly through the gap between the guides 59 having two faces opposed at a gap.

Lateral cutting, that is, the lateral cutting for the resin strand is conducted by using a fixed blade 60 provided to the lower end for one surface of the guide 59 and a lateral cutting rotary blade 61 to be described later by shearing the resin strand guided by the guide 59 between the blade tip of the lateral cutting rotary blades 61 and the blade tip of the fixed blade 60. The lateral cutting rotary blade 61 is disposed below the guide 59 and has a plurality of plate-like blades 62 at an equal distance between each of them and with the respective blade tips being arranged on one identical circumference with the axial center of the rotary shaft 63 as the center along the rotational direction of the rotary shaft 63.

The manufacturing method according to the invention is characterized in the method described above that the clearance 64 at the lower end of the guide 59 is set within a predetermined range of 5.0 to 15.0 mm, preferably, from 5.0 to 14.0 mm and, more preferably, 5.0 to 13.0 mm and further preferably, from 6.0 to 9.0 mm. By setting the clearance 64 at the lower end within the range described above, the resin pellets of the invention can be obtained easily and at good productivity, so that the subject described above can be solved easily. This will be described below specifically.

The present inventors intend to further improve the stability of the feeding amount of the resin pellets and attain to obtain a resin product of a desired quality at an extremely high accuracy thereby controlling the manufacture of the resin pellets for the quality such as uniformness or the size at high level. Then, when repeating experiments and studies in trial and error have revealed that the scattering of the resin strands in the forward and backward and leftward and rightward is at a level not negligible at all when the resin strands stripped from the respective longitudinal cutting rotary blades 55 are guided through the clearance between the guides 59 downwardly. That is, it has been found that the scattering observed during guidance gives a significant effect on the quality of the obtained resin pellets upon lateral cutting the resin strands subsequently and, thus, gives a significant effect also on the stability of the feeding amount described above, etc. Specifically, in the prior art, resin pellets of uniform length or uniform weight could not be obtained due to the effect of the scattering, and resin pellets at a specified length or less or with a specified weight or less could not be obtained even when various setting conditions are properly adjusted for the pelletizing apparatus. In view of the above, as means for effectively suppressing and dissolving the scattering of the resin strands and producing the resin pellets within a range not substantially lowering the production performance or ability of the pelletizing apparatus, it has been found that optimization for the clearance of the gap 64 at the lower end of the guide 59 and

setting it to a predetermined range are important. With such a setting, resinpellets of uniform length or uniform weight can be obtained easily and resin pellets at a specified length or less, and with a specified weight or less can be obtained easily.

As the means for actually setting the clearance for the gap 64 to a specified range in practicing the invention, it is preferred, for example, as shown in Fig. 4, to increase the thickness for one of opposed guides 59 (not having a fixed blade 60 at the lower end) to bring the opposing surface for one guide 59 closer to the opposing surface of the other guide 59. In this case, increase for the thickness of the one guide 59 is not particularly restricted and it is preferred, for example, to design such that the thickness increases gradually from the upper portion to the lower end of the guide 59 (so as to have an inclination) , in which the opposing surface may be a curved surface or a flat surface.

For practicing the manufacturing method of the invention by using the pelletizing apparatus as described above, for the setting and adjustment of various conditions other than the setting for the gap 64 at the lower end of the guide 59, conditions, etc. known so far in the technical field of resin pellet production can be applied preferably and the following conditions can be mentioned more preferably.

For practicing the manufacturing method of the invention, the circumferential speed of the longitudinal cutting rotary blade 55 is set, for example, within a range, preferably, from 1 to 60m/min, more preferably, 1 to 20 m/min, further preferably, 1.5 to 10 m/min and, particularly preferably, 3 to 5 m/min. The circumferential speed of the longitudinal cutting rotary blade 5 substantially corresponds to the take-up speed or the longitudinal cutting shearing speed of the resin sheet by the roll cutter 1. In a case where the circumferential speed of the longitudinal cutting rotary blade 5 exceeds 60 m/min, this may possibly deteriorate the economical property in view of the apparatus strength and, in a case where it is less than 1 m/min, the productivity may possibly be lowered. For practicing the method while setting the circumferential speed of the longitudinal cutting rotary blade 55 to the range described above, it is, for example, preferred to properly control the frequency (Hz) of a driving motor for the rotary shaft 54 and the number of rotation per min (rpm) of the rotary shaft 54.

For practicing the manufacturing method of the invention, the width at which the respective disk blades 52 of the two longitudinal cutting rotary blades 55 engage to each other (engaging width) is, for example, set preferably, to 1.0 to 5.0 mm, more preferably, 1.5 to 3.0 mm and, further preferably, 2.0 to 2.5 mm. In a case where the engaging width of the disk blade 52 exceeds 5.0 mm, it may be difficult to strip off the resin strands obtained after shearing from the gap portion between each of the disks 52 of the longitudinal cutting rotary blade 55 and, in a case where it is less than 1.0 mm, the resin sheet may not possibly be sheared completely.

For practicing the manufacturing method of the invention, the circumferential speed of the lateral cutting rotary blade 61 is, for example, setpreferablyto 1 to 15m/s, morepreferably, 1 to 10 m/s and, further preferably, 2 to 5 m/s. In a case where the number of circumferential speed of the lateral cutting rotary blade 61 exceeds 15 m/s, the resin strands per se to be sheared by impact upon shearing vibrate greatly to possibly cause remarkable scattering of size. In a case where it is less than 1 m/s, the cutting sharpness for the resin strands is poor to possibly form a sheared surface as if it were pluck away. For practicing the method while setting the circumferential speed of the lateral cutting rotary blade 61 to the range described above, it is preferred, for example, to property control the frequency (Hz) for the driving motor for the rotary shaft 63 and the number of rotation per min (rpm) of the rotary shaft 63.

In the lateral cutting rotary blade 61, plate-like blades 62 are disposed each at an equal distance to the periphery of the rotary shaft 63 by the number, preferably, from 2 to 30, more preferably 2 to 20 and, further preferably 3 to 10. In a case where the number of the plate-like blades 62 is less than two, the blade replacing frequency increases to possibly deteriorate the economic efficiency. In a case where it exceeds 30, this complicates the structure and may possibly require excessive costs and labors in view of the provision of the apparatus, etc.

In the manufacturing method according to the invention, the resin strand can be sheared to a predetermined length by properly setting the circumferential speed of the longitudinal cutting rotary blade, the circumferential speed of the lateral cutting rotary blade and the number of the plate-like blade described above to each other.

For practicing the manufacturing method according to the invention, various types of sheet pelletizing apparatus known so far can be applied by modification and setting thereof as the pelletizing apparatus described above. The manufacturing method according to the invention can be practiced by improving and setting the sheet pelletizer to be applied such that the clearance corresponding to the gap 64 at the lower end of the guide 59 described previously is within the specified range described above.

The sheet pelletizer described above can specifically include, for example, PM-350 (name of products) manufactured by Tanaka Co., SGE-220 (name of products) and SGE-350 (name of products) manufactured by Horai Co., etc.

In the manufacturing method of the invention, the resin pellets manufactured by using the pelletizing apparatus described above may further be pulverized by a pulverizer.

As the pulverizer, those having a structure provided with the lateral cutting rotary blade and the fixed blade in the pelletizing apparatus described above are preferred although not restricted particularly. For example, BO-210 (name of products) and BO-360 (name of products), etc. manufactured by Horai Co. can be mentioned. Various setting

conditions, etc. in the use of the pulverizer may be set properly so as to obtain desired resin pellets and, specifically, the following conditions are preferably set.

In practicing the manufacturing method of the invention by the pulverizer descried above, the circumferential speed of the pulverizing rotary blade is not particularly limited and it is preferably set such that the cutting processing cycles per unit time (for example, per 1 sec) satisfy a desired range while considering the number of plate-like blades provided to the periphery of the rotary shaft of the pulverizing rotary blade. The circumferential speed of the pulverizing rotary blade is preferably set, for example, by properly controlling the number of rotation per minute (rpm) of the rotary shaft and the frequency (Hz) for the driving motor of the rotary shaft.

In practicing the manufacturing method of the invention by using the pulverizer described above, the speed of further pulverizing the resin pellets (pulverization processing speed) is not particularly limited and, actually, it is set preferably by property controlling the charging rate of the resin pellets to be charged to the pulverizer. Further, since the processing speed referred to herein is a value relative to the time from the start till the end of the processing for the charged resin pellets, in a case, for example, of divisionally charging the pellets separately for several times as will be described later, it may suffice that the desired processing speed is satisfied on every charge while not considering the recess time between each of charging processing.

In the pulverization processing, the resinpellets served for processing may be charged collectively or charged while properly dividing the same, with no particular restriction. For conducting uniform pulverization processing with no unevenness, it is preferably charged continually. In a case of divisional charging, the amount of charge on every processing and the number of division may be properly set while considering the total amount of the resin pellets to be processed, etc.

The resin pellets obtained by the pulverization processing can be further classified. The classification referred to herein is conducted with an aim of removing those reduced into excessively fine size by the pulverization processing. Upon classification processing, it is preferred to conduct processing through a sieve with an opening of 0.4 mm or more and 0.6 mm or less, more preferably, 0.5 mm.

By further using the pulverizer or further conducting calcification, the second resin pellet of the invention described above, for example, can be obtained easily which is preferred.

The resin pellets of the invention can be used preferably as the resin material when various resin products such as hot melt adhesives, NBR rubbers, fluorine rubbers and waxes are produced by using various kinds of resin materials described above.

The invention is to be described more specifically with reference to examples and comparative examples but the invention is not restricted at all to them. In the following descriptions, "parts by weight" may sometimes be referred to simply as "parts", "litter" simply as "L" and, further, "% by weight" as "wt%" for the sake of convenience.

Measuring method and evaluation method in examples and comparative examples are shown below.

< Evaluation for the number distribution of the length of resin pellets >

From resin pellets of 10 kg or more, a cup of amount was taken by a 500 mL volume flask, and the resin pellets were extended flat on a planar plate and equally divided into 10 portions. From each of the equally divided ten portions, 10 to 15 pieces of resin pellets were sampled at random.

Each length for three types of sides, that is, length, width and height (three sides) was measured by using a micrometer (DIGIMATIC MICROMETER, manufactured by Mitutoyo) to determine the number distribution and the number average length L (mm) in the number distribution for each of the samples resin pellets.

In addition, in the number distribution for the length with respect to a specified one side among the three sides described above (side in which those within the range of (L ± 0 . 60) mm in the number distribution occupy less than 98.0%) , the number ratio for those within the predetermined range ((L ± 0.60) mm or (L ± 0.50) mm) was determined as "number ratio for the length (%)". For example, the expression: " (L ± 0. 60) mm" means "(L-0.60)mm or more and (L + 0.60) mm or less".

< Evaluation regarding the number distribution for the weight of resin pellet >

From resin pellets of 10 kg or more, a cup of amount was taken by a 500 mL volume flask, and the resin pellets were extended flat on a planar plate and equally divided into 10 portions. From each of the equally divided ten portions, 10 to 15 pieces of resin pellets were sampled at random.

For each of the grains of the sampled resin pellets, the weight was measured by a balance to determine the number distribution of the weight, the number average weight W(mg) in the number distribution, etc. As the balance, a precision balance with hood (Mettler AB204, manufactured by A&D Co., accuracy: ± 0.1 mg) which was set such that indicated values can be read into a book type personal computer by a data communication software was adopted.

In addition, in the weight number distribution, the number ratio for those within a predetermined range "((W

± 4.2) mg or (W ± 3. 6c) mg) were determined as "weight number ratio (%)". The expression, for example, "(W ± 4.2 c)mg" means " (W - 4.2 c)mg or more and (W + 4.2c)mg or less". "c" is a specific gravity of the resin pellet.

< Stability evaluation for feeding amount of resin pellet >

Resin pellets were charged into a screw feeder (K2GL; trade name of products manufactured by K-Tron Co., Screw; 9AC) and measured and evaluated at three types of feeding rate (3 kg/h, 7 kg/h, 15 kg/h) conditions respectively.

Several minutes after starting operation of the screw feeder, the total weight of the resin pellets discharged from the screw feeder was measured by the precision balance with hood described above on every other second and the indicated values were read into the book type personal computer. Based on the result, the total discharge amount for 30 secs was calculated while shifting each by 1 sec. For all of the data of the total discharge amount over 30 secs, the average value (A) and the standard deviation (S) were determined, and the deflection of the feeding amount of the resin pellets (2 σ (%) ) was determined by the following equation. The measurement was conducted for about 30 min.

$$2\sigma(\%) = [(2S)/A] \times 100$$

An aimed value was set in accordance with each feeding rate and the stability of the feeding amount of each resin pellet was evaluated depending on whether the aimed value could be obtained or not. Specifically, the aimed value was set as 3.0% or less at feeding rate of 3 kg/h, 1.50% or less at 7 kg/h, and 1.00% or less at 15 kg/h.

(Example 4-1)

A polymerizing reaction solution at a weight of a water soluble nonionic alkylene oxide resin and toluene at 50% by weight/50% by weight ratio obtained by solution polymerization was supplied to a thin film evaporator (EXEVA; name of products manufactured by Shinko Panteck Co.) (jacket temperature: 18 0°C, degree of vacuum: 50 Torr) , the polymerizing reaction solution was concentrated by desolvation, and discharged through a T-die (sheet die) (150 mm width, 2.3 mm gap) equipped to the thin film evaporator at a temperature of 145°C and at a discharging rate of 15 kg/ h, to obtain a resin sheet of a water soluble nonionic alkylene oxide copolymer with a toluene content of 0.16% by weight. The thickness of the resin sheet was 2.0 mm. Further, the specific gravity c of the prepared water soluble nonionic alkylene oxide copolymer was 1.11. The resin was a resin having a weight average molecular weight of 110, 000 having a structural unit derived from ethylene oxide and a structural unit derived from allylglycidyl ether at a ratio of 378 parts and 53 parts in this order.

As the pelletizing device, a sheet cutter having a structure as shown in Figs. 4 to 6 (PM-350; name of products manufactured by Tanaka Co.) was adopted. For the opposed two guides 59, a guide with a thickness at the lower end (bottom raised width) being increased by 12.0 mm from the standard state was used as the guide 59 not having the fixed blade 60 at the lower end and the gap 64 (clearance) between the lower ends of the opposed guides to each other was 8.0 mm when the thickness was increased at the lower end for one of the guides. An inclination was formed to the opposed surface to the other guide such that the thickness increases toward the lower end from the upper portion of the guide.

Then, the engaging width between the disk blades 52 to each other of the two longitudinal cutting rotary blades 55 of the roll cutter 51 was adjusted to 2.0 mm. Further, the thickness for the disk blade 52 was set to 3.5 mm.

Further, the two longitudinal cutting rotary blades 55 of the roll cutter 51 were rotated at a circumferential speed of 3.4 m/min (frequency for the driving motor for rotary shaft 4: 24 Hz) , and the lateral cutting rotary blade 61 was rotated at a circumferential speed of 3.0 m/s (frequency for the driving motor for rotary shaft 63: 30 Hz) . The lateral cutting rotary blade 61 had six blades 62 each at an equal distance at the periphery of the rotary shaft 63.

A resin sheet of the water soluble nonionic alkylene oxide copolymer was chargedto a sheet cutter in which the longitudinal cutting rotary blade 55 and the lateral cutting rotary blade 61 were rotated from the engaging portion 56.

The prepared resin pellets discharged from the sheet cutter were recovered by about 10 kg into one bag and then stirred thoroughly. They were recovered from the resin pellets excluding the resin pellets discharged just from after the charging of the resin sheet to lapse of 3 sec and square pellets discharged from 3 sec before the end of the processing for all the resin sheet till the end of the processing.

Then, for the resin pellets recovered in the bag, evaluation regarding the number distribution for the length, evaluation regarding the weight number distribution, and the stability evaluation for the feeding amount were conducted by the method described previously. All the recovered resin pellets included those in which two sizes, among the three types of sides for length, width and height (three sides), within the range of (L ± 0.60) mm occupied 98.0 % or more in the distribution for the length and those in which those having remaining one sides within the range described above occupied less than 98.0%. Further, also in a case where the range of (L ± 0.6) mm was restricted to a range of (L ±

0.50) mm, those having two sides, among the three sides, occupied 98.0% or more and those having remaining one sides occupied less than 98.0%. Accordingly, the evaluation regarding the number distribution for the length could be conducted while specifying the target of the evaluation to those having remaining one sides. The results are shown in Table 4.

(Examples 4-2 to 4-10)

Resin sheets of water soluble nonionic alkylene oxide copolymers were prepared in the same manner as in Example 4-1.
The resin pellets were prepared and recovered in the same manner as in Example 4-1 except for changing and setting the bottom raised width, clearance, engaging width, the circumferential speed of the longitudinal cutting rotary blade and the circumferential speed of the lateral cutting rotary blade as shown in Table 3 in Example 4-1.
For the recovered resin pellets, each of the evaluations was conducted in the same manner as in Example 4-1. The target of the evaluation was specified in the same manner regarding the number distribution for the length. The results are shown in Table 4.

(Example 4-11)

A resin sheet of water soluble nonionic alkylene oxide copolymers was prepared in the same manner as in Example 4-1.
The resin pellets were prepared and recovered in the same manner as in Example 4-1 except for changing and setting the bottom raised width, clearance, engaging width, the circumferential speed of the longitudinal cutting rotary blade and the circumferential speed of the lateral cutting rotary blade as shown in Table 3 in Example 4-1.
Successively, the recovered resin pellets were charged into a pulverizer (pulverizer used exclusively for film sheet, BO-210; name of products manufactured by Horai Co.) and pulverized. Specifically, the circumferential speed of the rotary blade of the pulverizer (equipped with three plate-like blades at the periphery) to 7.1 m/s (number of rotation per min of rotary shaft: 850 rpm), and charge of the resin pellets to the pulverizer was conducted by dividing into five times each by about 2.0 kg, and the pulverization processing speed for each time was set to 11 kg/h.
After processing by the pulverizer, they were put on a sieve of 0 . 5 mm opening for making it sure to remove pass fractions and then the resin pellets were recovered. The pass fractions were 0.1 wt% or less.
For the recovered resinpellets, various evaluations were conducted in the same manner as in Example 4-1. The results are shown in Table 4.

(Example 4-12)

A resin sheet of a water soluble nonionic alkylene oxide copolymer was prepared in the same manner as Example 4-1.
Resin pellets were prepared and recovered in the same manner as in Example 4-11 except for changing and setting the clearance, engaging width, circumferential speed of the longitudinal cutting rotary blade, the circumferential speed of the lateral cutting rotary blade, the circumferential speed of the rotary blade of the pulverizer and the pulverization processing speed as shown in Fig. 3 in Example 4-11.
For the recovered resinpellets, various evaluations were conducted in the same manner as in Example 4-1. The results are shown in Table 4.

(Comparative Examples 4-1 to 4-5)

Resin sheets of water soluble nonionic alkylene oxide copolymers were prepared in the same manner as in Example 4-1.
The resin pellets were prepared in the same manner as in Example 4-1 except for changing and setting the bottom raised width, clearance, engaging width, the circumferential speed of the longitudinal cutting rotaryblade and the circumferential speed of the lateral cutting rotary blade as shown in Table 3 in Example 4-1.
For the recovered resin pellets, each of the evaluations was conducted in the same manner as in Example 4-1. The target of the evaluation was specified in the same manner regarding the number distribution for the length. The results are shown in Table 4.

Table 3

| | Raised bottom width (mm) | Clearance (mm) | Engaging width (mm) | Circumferential speed of longitudinal cutting rotary blade (m/min) (frequency (Hz) for driving motor for rotary shaft) | Circumferential speed of lateral cutting rotary blade (m/s) (frequency (Hz) for driving motor for rotary shaft) | Circumferential speed (m/s) of rotary blade of pulverizer (number of rotation per min of rotary shaft (rpm)) | Pulverization processing speed (kg/h) |
|---|---|---|---|---|---|---|---|
| Example 4-1 | 12.0 | 8.0 | 2.0 | 3.4(24) | 3.0(30) | - | - |
| Example 4-2 | 13.5 | 6.5 | 2.0 | 4.0(28) | 2.5(25) | - | - |
| Example 4-3 | 13.5 | 6.5 | 2.0 | 5.0(35) | 4.4(45) | - | - |
| Example 4-4 | 12.0 | 8.0 | 2.0 | 3.4(24) | 3.0(30) | - | - |
| Example 4-5 | 13.6 | 5.4 | 3.0 | 4.0(28) | 2.5(25) | - | - |
| Example 4-6 | 12.0 | 8.0 | 2.0 | 3.4(24) | 3.5(35) | - | - |
| Example 4-7 | 12.0 | 8.0 | 2.0 | 3.4(24) | 3.9(40) | - | - |
| Example 4-8 | 12.0 | 8.0 | 2.0 | 3.4(24) | 4.9(50) | - | - |
| Example 4-9 | 12.0 | 8.0 | 2.0 | 3.4(24) | 3.7(37) | - | - |
| Example 4-10 | 12.5 | 7.5 | 2.0 | 3.4(24) | 3.9(40) | - | - |
| Example 4-11 | 13.0 | 7.0 | 2.0 | 5.0(35) | 4.4(45) | 7.1(850) | 11 |
| Example 4-12 | 13.0 | 7.0 | 2.0 | 5.0(35) | 9.9(100) | 7.1(850) | 38 |
| Comparative Example 4-1 | 0 | 20.0 | 2.0 | 3.4(24) | 3.0(30) | - | - |
| Comparative Example 4-2 | 0 | 20.0 | 2.0 | 3.4(24) | 3.0(30) | - | - |
| Comparative Example 4-3 | 0 | 20.0 | 2.0 | 3.4(24) | 3.9(40) | - | - |
| Comparative Example 4-4 | 0 | 20.0 | 2.0 | 3.4(24) | 4.9(50) | - | - |
| Comparative Example 4-5 | 0 | 20.0 | 2.0 | 3.4(24) | 2.5(25) | - | - |

Table 4

| | Number average length L (mm) | Number ratio for length(%) | | Number average weight W (mg) | Number ratio for weight (%) | | Stabilization evaluation for feeding amount (%) | | |
|---|---|---|---|---|---|---|---|---|---|
| | | (*1) | (*2) | | (*3) | (*4) | 3kg/h | 7kg/h | 15kg/h |
| Example 4-1 | 2.58 | 98.0 | 92.0 | 15.8 | 100 | 99.0 | 2.10 | 1.31 | 0.98 |
| Example 4-2 | 3.92 | 95.0 | 90.0 | 25.6 | 97.0 | 94.0 | 2.80 | 1.40 | 0.97 |
| Example 4-3 | 3.44 | 98.0 | 96.0 | 27.0 | 100 | 99.0 | 2.99 | 1.50 | 1.00 |
| Example 4-4 | 2.86 | 95.0< | 80.0 | | | | | | |
| Example 4-5 | 3.76 | 98.0< | 86.0 | | | | | | |
| Example 4-6 | 2.67 | 97.0< | 80.0 | | | | | | |
| Example 4-7 | 2.01 | 97.0< | 90.0 | | | | | | |
| Example 4-8 | 1.64 | 97.0< | 93.0 | | | | | | |
| Example 4-9 | 2.11 | 97.0 | 89.0 | 14.7 | 100 | 99.0 | 2.00 | 1.29 | 0.95 |
| Example 4-10 | 2.08 | 98.0 | 87.0 | 12.7 | 99.0 | 99.0 | | | |
| Example 4-11 | - | - | - | 4.5 | 95.0 | 90.0 | 0.95 | 0.77 | 0.72 |
| Example 4-12 | - | - | - | 5.5 | 94.0 | 88.0 | | | |
| Comparative Example 4-1 | 3.88 | 50.0 | 36.0 | 23.4 | 41.0 | 32.0 | 3.30 | 1.60 | 1.10 |
| Comparative Example 4-2 | 3.72 | <47.0 | 20.0 | | | | | | |
| Comparative Example 4-3 | 3.18 | <47.0 | 30.0 | | | | | | |
| Comparative Example 4-4 | 3.28 | <47.0 | 29.0 | | | | | | |
| Comparative Example 4-5 | 4.38 | <45.0 | 23.0 | | | | | | |

*1: Number ratio within the range of (L ± 0.60) mm in the number distribution for length
*2: Number ratio within the range of (L ± 0.50) mm in the number distribution for length
*3: Number ratio within the range of (W ± 4.2c) mg in the number distribution for weight
*4: Number ratio within the range of (W ± 3.6c) mg in the number distribution for weight

5. Method of manufacturing resin pulverized products

The manufacturing method of the invention is a method of manufacturing pulverized products of a water soluble nonionic alkylene oxide resin with the crystallization temperature being in a range from 10 to 60°C.
The water soluble nonionic alkylene oxide resin as the target to which the invention is applied is as described above. The form of the resin before pulverization is not particularly limited. It is, for example, pellet, strand and sheet.
The invention is to be described with reference to the drawing. Fig. 7 is a view showing the inner structure of a pulverizer that can be used in the invention. However, the drawing shows the outline of the apparatus and shapes for each of the portions of the apparatus, etc. are not restricted to those shown in the drawing.
In Fig. 7, are shown a rotor 71, rotary blades 72 attached to the rotor, afixedblade73, a screen 74, anda screen receptacle 75, respectively.
As shown in the drawing, three rotary blades 72 are attached to the circumferential surface of the cylindrical rotor 71, and the fixed blade 73 is attached at a position not in contact with the rotary blade 72 but capable of cutting the resin by shearing with the rotary blades 72. The number of three for the rotary blades 72 means that they are three on the cross section of the rotor 10 and the number of blades disposed over the entire rotor 71 may include a case of three or a case of three or more. That is, in a case where the rotor 71 is long, a plurality of rotary blades 72 are arranged in a longitudinal direction of the rotor 71. The rotor 71 rotates in the direction shown by an arrow in the drawing.
The screen 74 and the screen receptacle 75 are provided to the outer circumference of the rotor 71 and the screen receptacle 75 may be openable and closable as shown by the dotted chain. The coarseness for the openings of the screen 74 is decided depending on the aimed grain size of the pulverized products.
In the apparatus, the resin is supplied from the opening in the upper portion, and cut by shearing between the rotary blade 72 and the fixed blade 73 as if by using scissors. The cut resin when it is formed into the pulverized product with a grain size smaller than the mesh of the screen 74 can pass through the screen 74 and be received by the screen receptacle 75. The pulverized products are taken out by opening the screen receptacle 75. On the other hand, the material not passing through the screen 74 is raised by the rotary blade 72, again undergoes cutting and such cutting is repeated till it is reduced into a grain size smaller than the mesh of the screen 74. For the apparatus, a water cooling jacket can also be mounted.
By the use of the apparatus as described above, pulverization at low power and low speed rotation is possible thereby enabling to decrease the amount of generated heat. For decreasing the amount of generated heat, the number of rotation of the rotor 71 is, preferably, from 100 to 1000 rpm and, more preferably, from 400 to 800 rpm.
Further, while description has been made to a case where the number of the rotary blade 72 is three, this is not limitative . However, since the amount of generated heat increases if the number is excessive, it is preferably about from 1 to 5 and, more preferably, from 2 to 5 in view of the efficiency.
The temperature of the resin after pulverization is preferably at the crystallization temperature or lower and, for this purpose, it is preferred that the resin to be supplied to the pulverizer is previously cooled to [Tc + 10]°C or lower. This can prevent softening of the resin and can prevent decrease of the shearing resistance and deposition of softened resin to the blade.
Further, it is preferred to introduce a cold blow into the pulverizer to prevent the increase of the temperature for the resin and the pulverizer. While the method of introducing the cold blow is not particularly limited, it may be blown through the opening in the upper portion of the apparatus at the same time with the charging of the resin as a simple and convenient method. As described above, since the temperature of the resin after pulverization is preferably at the crystallization temperature of the resin or lower, the temperature and the blow rate of the introduced cold blow are controlled with reference to this. Since the amount of heat generation is different depending on the operation condition, etc. the specific temperature and the blow rate of the cold blow can not be decided generally, but usually, the temperature of the cold blow is preferably within a range of from [Tc - 5]°C to [Tc - 50]°C and, more preferably, within a range from [Tc - 10]°C to [Tc - 30]°C. Further, the measure of the blow rate is from 5 to 100 $m^3$/min.
By the use of the pulverizer as described above, even a water soluble nonionic alkylene oxide resin with a low crystallization temperature, it can be pulverized at a reduced cost without using coolants at cryogenic temperature, etc. However, since it is difficult to completely shield the pulverizer from the external circumstance, the effect of the invention can not sometimes be obtained sufficiently in a high temperature and high humidity circumstance undergoing the effect thereof. Accordingly, it is preferred to place a pulverizer in a room at an air temperature of [Tc + 20]°C or lower and at a relative humidity of 90% or less and, thereby preventing the elevation of temperature during pulverization.
Examples of the invention are shown below but the invention is not restricted to them.
The crystallization temperature (Tc) means a temperature measured by the thermal analysis (DSC) also in this case and the molecular weight means a numerical value measured by the GPC analysis described above.

(Synthesis example 5-1)

150 kg of dewatered toluene was charged in an autoclave equipped with a stirrer, 27 g of sodium methylate was added as a catalyst, the temperature was elevated at 100°C, and ethylene oxide, 1, 2-butylene oxide, and allyl glycidyl ether were added successively at a ratio of 90:7:3 (weight ratio) by 100 kg in total, to obtain a resin (polymer) solution. The crystallization temperature of the resin was 22°C and the molecular weight was 100,000.

(Example 5-1)

A solvent was removed under a reduced pressure from the polymer solution obtained by Synthesis Example 5-1, and after molding into a sheet-shape, it was cut to obtain resin pellets each of 5 mm square.

The resin pellets were used and pulverized. As the pulverizer, a helical three blade pulverizer with a screen having a structure shown in Fig. 7 and having three rotary blades (FGH 3-2060: manufactured by Horai Co.) was used, pellets were supplied in a constant amount by a solenoid feeder, and cold blow was introduced into the machine to conduct cooling. The pulverization conditions were set for the number of rotation of the pulverizer to 550 rpm, the screen diameter to 3 mmϕ; the temperature of the supplied pellets at 15°C, the feeding amount to 60 kg/h, the cold blow temperature at 10°C and the blow rate to 10 $m^3$/min, and the circumstance where the pulverizer was placed was at an air temperature of 15°C and at a relative humidity of 75%.

The exit temperature of pulverizer was 18°C, the grain size of the obtained pulverized products was 2. 0 mm or less and no secondary cohesion between each of the particles was observed to show an excellent state.

(Comparative Example 5-1)

Pulverization was conducted in the same manner as in Example 5-1 except for changing the pulverizer to a hammer mill (MGH-10, manufactured by Fukae Pautec Co.) . The pulverization conditions were set for the number of rotation of the pulverizer to 4,000 rpm, the screen diameter to 3 mmϕ, the temperature of the supplied pellet at 10°C, the feeding amount to 50 kg/h, the cold blow temperature at 10°C, the blow rate to 15 $m^3$/min and the circumstance where the pulverizer was placed was at an air temperature of 15°C and at a relative humidity of 75%.

After starting the pulverization, the exit temperature of the pulverizer gradually elevated and a great amount of secondary cohesion was observed for the resin pulverized products, the exit temperature was elevated to 24°C in 10 min after the starting and the pulverizer was overloaded and stopped.

When the inside of the pulverizer was confirmed, the resin pellets were softened to cause clogging of the screen, which caused blockage.

(Synthesis Example 5-2)

A resin solution was obtained in the same manner as in Synthesis Example 5-1 except for changing the monomer composition to ethylene oxide: 1,2-butylene oxide = 92:8. The crystallization temperature of the polymer was 18°C and the molecular weight was 110,000.

(Example 5-2)

Resinpellets were obtained in the same manner as in Example 5-1 from the resin solution obtained in Synthesis Example 5-2. Pulverization was conducted by using the resin pellets. The same pulverizer as in Example 5-1 was used, pellets were supplied in a constant amount by a solenoid feeder, and cold blow was introduced into the machine to conduct cooling. The pulverization conditions were set for the number of rotation of the pulverizer to 500 rpm, the screen diameter 3 mmϕ; the temperature of the supplied pellets at 10°C, the feeding amount was 50 kg/h, the cold blow temperature was 10°C, the blow rate to 10 $m^3$/min, and the circumstance where the pulverizer was placed was at an air temperature of 15°C and at a relative humidity of 75%.

The exit temperature of the pulverizer was 16°C, the grain size of the obtained pulverized product was 2.0 mm or less and no secondary cohesion between each of the particles was observed to show excellent state.

(Comparative Example 5-2)

Pulverization was conducted in the same manner as in Example 5-2 except for changing the pulverizer to a hammer mill used in comparative example 5-1. The pulverization conditions were set for the number of rotation of the pulverizer to 3,500 rpm, the screen diameter to 3 mmϕ, the temperature of the supplied pellets at 10°C, the feeding amount to 30 kg/h, the cold blow temperature at 10°C, the blow rate to 15 $m^3$/min and the circumstance where the

pulverizer was placed was at an air temperature of 12°C and at a relative humidity of 75%.

The exit temperature of the pulverizer exceeded 20°C in several minutes after starting the pulverization, and pulverized products were not discharged instantly. When the inside of the pulverizer was confirmed, the resin pellets were softened to clog the screen thereby causing blockage.

## Claims

**1.** A method of removing a solvent from a solution of a water soluble nonionic alkylene oxide resin, which comprises
removing a solvent by using an apparatus having an evaporation vessel to which a resin solution is charged and a stirring blade having a helical ribbon-shaped portion disposed in the evaporation vessel, in which the stirringblade is disposed so as to scrape-up a resin solution and coating the same to the inner wall surface of the evaporation vessel upon rotation.

**2.** A solvent removing method according to claim 1, wherein one of log bone blade, a helical ribbon blade or double helical ribbon blade is used as_a stirring blade having the helical ribbon-shaped portion.

**3.** A solvent removing method according to claim 1 or 2, wherein desolvation is conducted after nitrogen substitution or depressurization for the inside of the evaporation vessel.

**4.** A solvent removing method according to any one of claims 1 to 3, wherein the solvent is removed while heating the inside of the evaporation vessel by way of a heating medium.

**5.** A solvent removing method according to claim 4, wherein the temperature of the heating medium is controlled such that the difference between the temperature of the heating medium and the temperature inside the vessel is kept substantially constant.

**6.** A water soluble nonionic alkylene oxide resin in which a solvent is removed by the solvent removing method according to any one of claims 1 to 5.

**7.** Amethod of manufacturing a water soluble nonionic alkylene oxide resin in which a water soluble nonionic alkylene oxide resin in a flowable state obtained by polymerization using a solvent and with the solvent removed by desolvation under heating is brought into contact with a metal plate and cooled to solidify.

**8.** A method of manufacturing a water soluble nonionic alkylene oxide resin according to claim 7, including the step of pelletizing the cooled and solidified water soluble nonionic alkylene oxide resin.

**9.** Amanufacturingmethodof awater soluble nonionic alkylene oxide resin according to claim 7 or 8, wherein the water soluble nonionic alkylene oxide resin in a flowable state contains a stabilizer.

**10.** A method of manufacturing pellets of a water soluble nonionic alkylene oxide resin having a crystallization temperature within a range from 10 to 60°C, which comprises,
extruding a water soluble nonionic alkylene oxide resin in a molten state to a predetermined thickness,
cooling to solidify the extruded molten resin by bringing it into contact with a metal surface at a temperature not higher than the crystallization temperature (Tc) of the resin and
cutting the solidified resin into pellets.

**11.** A method of manufacturing pellets of a water soluble nonionic alkylene oxide resin according to claim 10, wherein the extruding temperature of the resin in the molten state is controlled to (Tc+80)°C or lower.

**12.** A method of manufacturing pellets of a water soluble nonionic alkylene oxide resin according to claim 10 or 11, wherein air at a temperature of (Tc - 5)°C or lower and at a relative humidity of 70% or less is blown to a portion to be cut upon cutting the solidified resin thereby cooling the portion to be cut.

**13.** A method of manufacturing pellets of a water soluble nonionic alkylene oxide resin according to any one of claims 10 to 12, wherein cutting for the solidified resin is conducted under an environment at an air temperature of (Tc + 5)°C or lower and at a relative humidity of 90% or less.

**14.** A method of manufacturing pellets of a water soluble nonionic alkylene oxide resin according to any one of claims 10 to 13, wherein cutting of the solidified resin is conducted by using a blade applied with a fluoro resin-containing plating.

**15.** Pellets of a water soluble nonionic alkylene oxide resin, manufactured by the manufacturing method according to any one of claims 10 to 14.

**16.** Resin pellets each of a rectangular shape wherein

those having two sides within a range of (L - 0.60) mm or more and (L + 0.60) mm or less occupy 98.0% or more assuming the number average length in each of the number distributions for the lengths of three sides of length, width and height as L (mm) , and those having remaining one sides within the range described above occupy less than 98.0%, and wherein

those having the remaining one side within a range of (L - 0 . 60) mm or more and (L + 0. 60) mm or less occupy 70.0% or more.

**17.** Resin pellets each of a rectangular shape, wherein

those having two sides within a range of (L - 0.60) mm or more and (L + 0.60) mm or less occupy 98.0% or more assuming the number average length in each of the number distributions for of the lengths of three sides of length, width and height as L (mm), and those having the remaining one side within the range described above occupy less than 98.0%, and wherein

$L \leq 3.0$ mm for the remaining one side.

**18.** Resin pellets in which those within a range of (W -4.2c) mg or more and (W + 4.2c) mg or less occupy 70.0% or more assuming the number average weight in the number distribution as (W) mg and the specific gravity thereof as c.

**19.** Resin pellets in which $W \leq 16.5c$ mg, assuming the number average weight in the number distribution as (W) mg and the specific gravity thereof as c.

**20.** Resin pellets according to claim 18 or 19 each having a rectangular shape.

**21.** Resin pellets according to any one of claims 16 to 20 comprising a water soluble nonionic alkylene oxide copolymer.

**22.** Amethod of manufacturing resin pellets by lateral cutting resin strands obtained by longitudinally cutting a resin sheet, thereby obtaining resin pellets, which includes,

conducting longitudinal cutting by using a roll cutter where two longitudinal cutting rotary blades each having a plurality of disk blades along the direction of the rotary shaft such that they are spaced with an equal distance from each other with the blade tip for each of them being directed vertical to the axial direction of the rotary shaft extend such that respective rotary shafts extend horizontally and in parallel so that the respective disk blades engage each other, and where the rotational directions are different from each other, and shearing the resin sheet by supplying the sheet to the engaging portion of the two longitudinal cutting rotary blades,

stripping off the resin strand after shearing by a scraper with a stripping portion facing the gap portion between each of the disk blades for the two longitudinal cutting rotary blades,

guiding the stripped resin strand downward through the gap of a guide having two surfaces opposed to each other by way of a gap, and

conducting lateral cutting by using lateral cutting rotary blades disposed below the guide and having a plurality of plate blades along the rotational direction of the rotary shaft spaced with an equal distance from each other with the respective blade tip thereof being faced on one identical circumference having the axial center of the rotary shaft as the center, and a fixed blade disposed at the lower end of one of the surfaces of the guide and shearing the resin strand guided by the guide between the blade tip of the rotary blade and the blade tip of the fixed blade, wherein

the gap at the lower end of the guide is set to 5.0 to 15.0 mm.

**23.** A method of manufacturing pulverized products of a water soluble nonionic alkylene oxide resin having a crystallization temperature within a range from 10 to 60°C, which uses, as a pulverizer,

a.pulverizer having a rotor, at least one rotary blade attached to the circumferential surface of the rotor, at least one fixed blade attached so as to pulverize a resin by shearing with the rotary blade, and a screen attached to the outer circumferenceof the rotor and receiving the pulverized products, in which the resin is pulverized by

the shearing force exerting between the rotary blade and the fixed blade by the rotation of the rotor, pulverized products smaller than the aimed grain size pass through the screen, while particles larger than the aimed grain size are raised by the rotary blade and then again pulverized by the rotary blade and the fixed blade.

**24.** Amethod of manufacturing pulverizedproducts of the water soluble nonionic alkylene oxide resin according to claim 23, wherein the number of rotation of the rotor is from 100 to 1000 rpm.

**25.** A method of manufacturing pulverized products of water soluble nonionic alkylene oxide resin according to claim 23 or 24, wherein the resin supplied to the pulverizer is previously cooled to [Tc + 10]°C or lower such that the temperature of the resin after pulverization is at a crystallization temperature [Tc] or lower and a cold blow at predetermined temperature and of a blow rate is supplied together with the resin into the pulverizer.

**26.** Amethod of manufacturing pulverized products of the water soluble nonionic alkylene oxide resin according to claim 25, wherein the temperature of the cold blow is within a range from [Tc - 5]°C to [Tc -50]°C.

**27.** Amethod of manufacturing pulverized products of the water soluble nonionic alkylene oxide resin according to any one of claims 23 to 26 wherein the pulverization is conducted under a circumstance at an air temperature of [Tc + 20]°C or lower and at a relative humidity of 90% or less.

**28.** Pulverized product of a water soluble nonionic alkylene oxide resin manufactured by the manufacturing method according to any one of claims 23 to 27.

FIG. 1

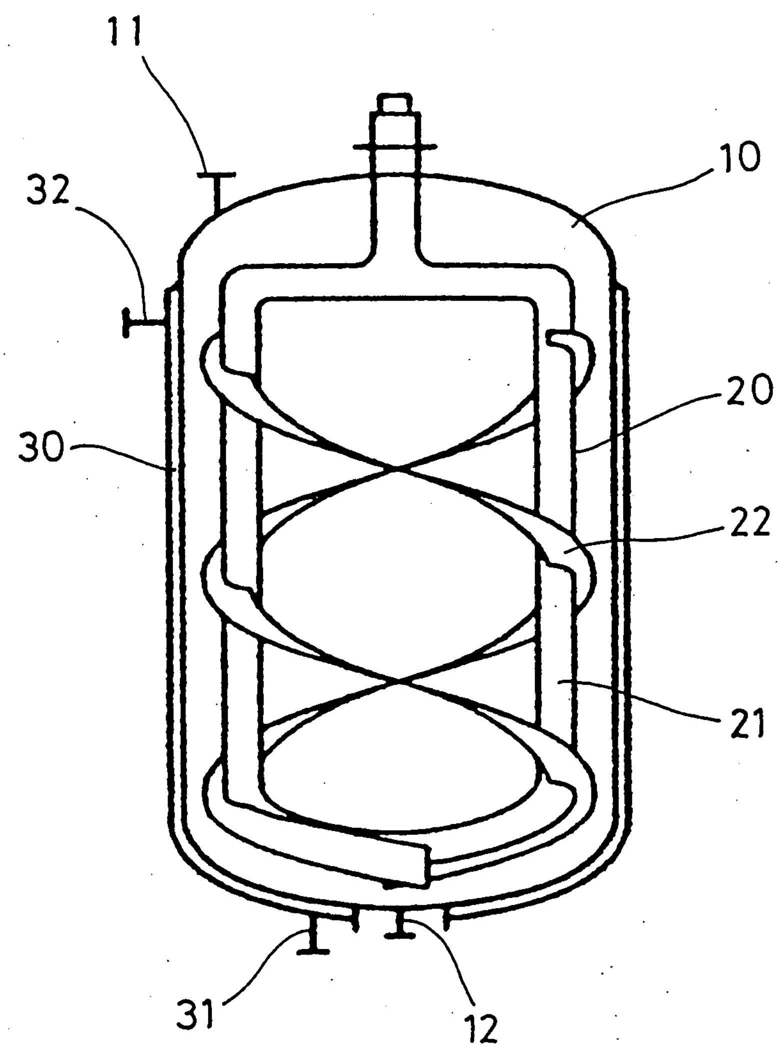

FIG. 2

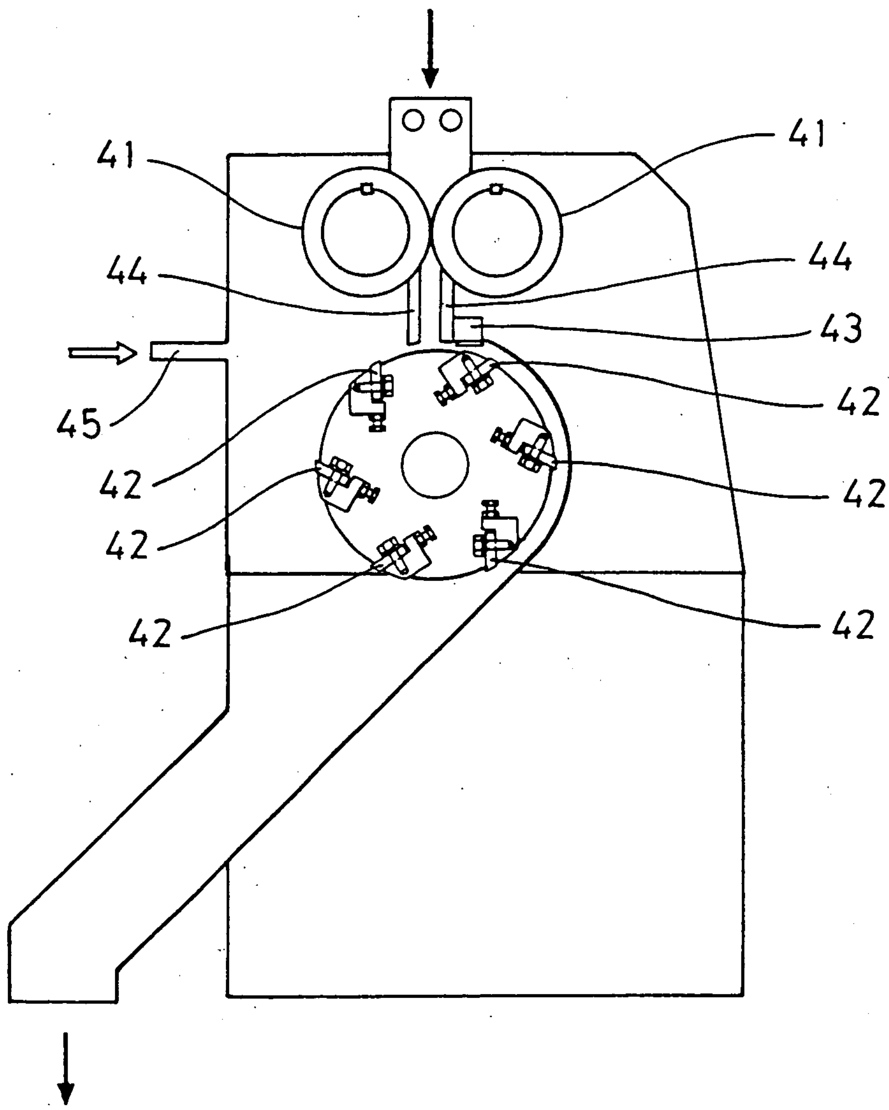

FIG. 3

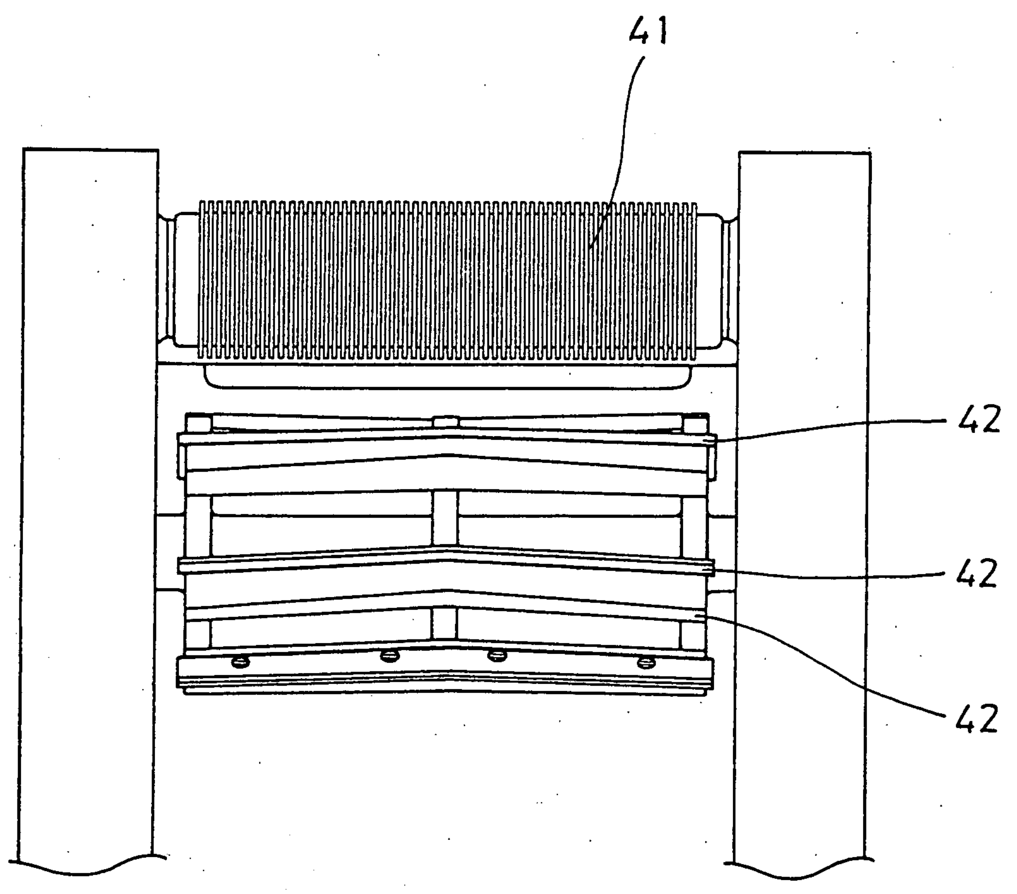

FIG. 4

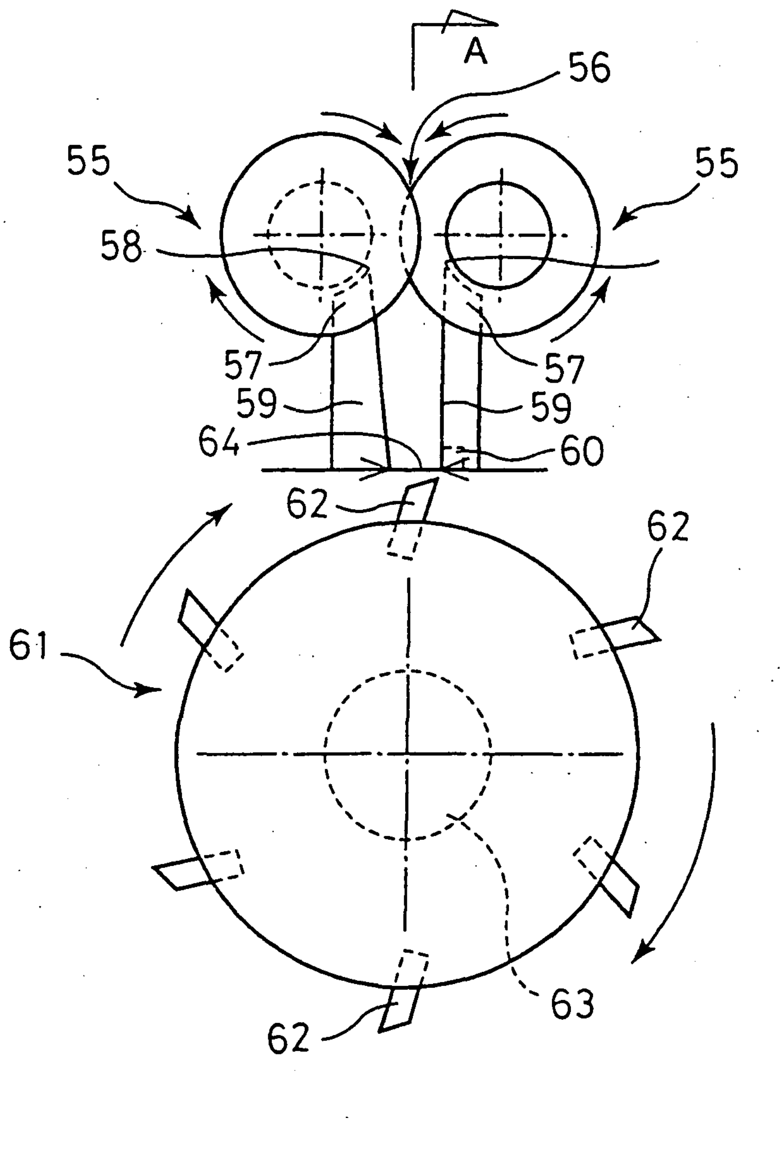

FIG. 5

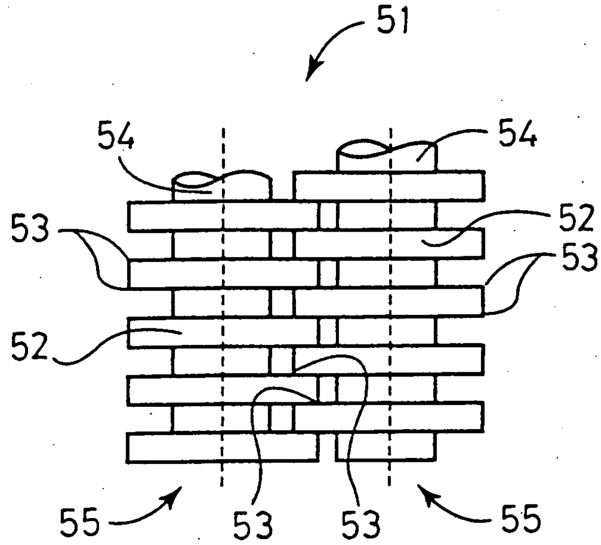


FIG. 6

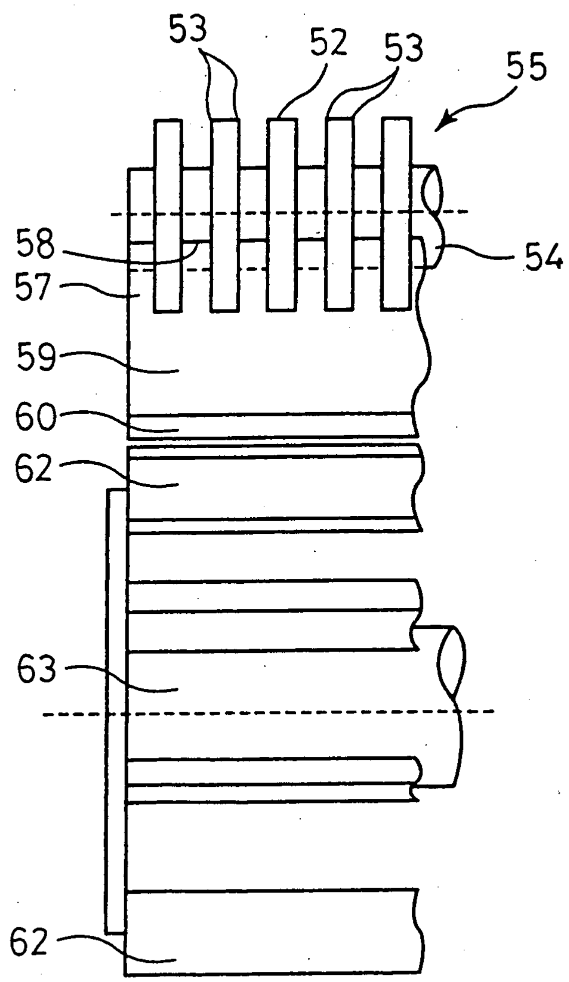

FIG. 7